(19) Europäisches Patentamt
European Patent Office
Office européen des brevets

(11) **EP 4 343 379 A1**

(12) **DEMANDE DE BREVET EUROPEEN**

(43) Date de publication:
**27.03.2024   Bulletin 2024/13**

(51) Classification Internationale des Brevets (IPC):
*G01S 13/90* $^{(2006.01)}$

(21) Numéro de dépôt: **23196558.3**

(52) Classification Coopérative des Brevets (CPC):
**G01S 13/9058**

(22) Date de dépôt: **11.09.2023**

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**KH MA MD TN**

(30) Priorité:  **23.09.2022   FR 2209697**

(71) Demandeur: **Revol, Marc
26120 Upie (FR)**

(72) Inventeur: **Revol, Marc
26120 Upie (FR)**

(54) **PROCÉDÉ ET DISPOSITIF DE DÉTECTION D OBSTACLES PROCHES PAR RADAR PASSIF MULTISTATIQUE GNSS POUR PLATEFORMES MOBILES**

(57)    L'invention décrit un procédé de détection et de localisation d'obstacles, selon le principe du radar passif multistatique, utilisant des signaux d'opportunité de type GNSS, réalisant un filtrage adapté spatial en complément du filtrage adapté en temps et fréquence communément utilisé pour le positionnement. Ce filtrage spatial, réalisé par traitement d'antenne à synthèse d'ouverture, est adapté aux directions d'arrivée des signaux indirects définies suivant une grille de points de réflexion, disposées en angles et en distances à proximité de la position du porteur.

Le filtrage adapté spatial réalise un balayage des directions de réflexion couvrant les hypothèses d'angles d'arrivée en gisement des échos par rapport à la direction de déplacement du porteur. Ces directions angulaires sont définies conjointement aux hypothèses de retards et de doppler des signaux indirects réfléchis, établies relativement au temps d'arrivée et aux fréquences de réception des signaux directs poursuivis par le récepteur.

[Fig. 2]

EP 4 343 379 A1

## Description

### Résumé de l'invention

L'invention concerne l'augmentation des performances du radar passif multistatique GNSS par l'adjonction d'un traitement d'antenne à synthèse d'ouverture.

L'objectif du traitement est de fournir une nouvelle capacité de perception de l'environnement proche du porteur permettant d'améliorer la résolution de la détection sans impliquer de dispositif supplémentaire, ceci en renforçant les aptitudes des signaux de radionavigation à fournir des mesures de retard et de doppler, indispensables par ailleurs pour la navigation bord, tels les signaux GNSS.

A cette fin, le principe consiste à augmenter par traitement d'antenne la sensibilité en réception des signaux réfléchis sur les obstacles, issus de sources radio synchronisées référencées, lorsqu'elles présentent une large disponibilité dans l'espace et dans le temps, afin de permettre la détection et la localisation d'obstacles proches.

Lorsque la structure du signal, les positions et vitesses des sources d'émission des signaux sont connues a priori, l'approche définie selon l'invention consiste à ajouter la dimension spatiale au filtrage adapté pour la scrutation de l'environnement, en complément des dimensions temps-fréquence du filtrage adapté appliqué pour réaliser la détection de sources de réflexion.

Le filtrage adapté spatial est obtenu par traitement d'antenne à synthèse d'ouverture appliqué à la réception des signaux, ce qui représente une alternative à la complexité des antennes réseaux à directivité électronique, puisqu'il peut être réalisé à partir d'une seule antenne. Il tire parti de la connaissance du déplacement et de la position du porteur, obtenus par ailleurs, et de la nécessaire cohérence temporelle de la phase du signal, pour créer des voies de directivité orientées en direction d'une grille de points de réflexion en angle-distance.

Ce principe vaut pour tous types de signaux cohérents et à phase stationnaire, et se trouve particulièrement adapté pour les signaux GNSS, l'intégration cohérente à phase stationnaire nécessaire au traitement spatial étant alors intégrée naturellement dans le traitement adapté sur le retard, conventionnellement mis en oeuvre par les récepteurs GNSS.

### Domaine de l'invention

Le domaine de l'invention est relatif à la détection et la localisation d'échos radar en mode passif, à partir de sources d'émission radio disponibles, dites signaux d'opportunité, présentant des caractéristiques de synchronisations temporelle et spatiale connues.

Le mode de fonctionnement est du type radar passif, sans émission active dédiée, mettant à profit les signaux existants sur le principe dit « du radar passif multistatique » pour détecter et localiser les obstacles situés à proximité, dont un mode de réalisation connu porte la marque déposée « SaNGèNE ».

Le principe dudit radar passif multistatique consiste à utiliser des sources radio existantes pour l'éclairage des obstacles, lorsque ces signaux ont une large disponibilité dans l'espace et dans le temps, afin de permettre la détection et la localisation d'obstacles proches de l'ordre de quelques centaines de mètres, à partir des signaux indirects réfléchis.

Ce principe consiste à rechercher, dans une zone à explorer, les échos du signal direct pour alerter de la présence d'obstacles à proximité de la plateforme mobile, dite « le porteur » et à exploiter les mesures de retards relatifs entre le direct et l'écho pour fournir une première localisation de la position de l'obstacle, moyennant la connaissance de la position des sources d'émission des signaux d'origine et de la position dudit porteur, cette dernière étant obtenue par mise en oeuvre d'un moyen de localisation standard.

Les signaux d'opportunité considérés sont ceux qui possèdent intrinsèquement des capacités de localisation ou de synchronisation par distribution d'un temps de référence, et présentant suffisamment de résolution temporelle pour autoriser la détection et la localisation d'obstacles proches à partir des signaux réfléchis, comme le permettent les systèmes de radio navigation utilisant des signaux à codes d'étalement, mais aussi certains signaux de télécommunication à large bande.

A ce titre, les constellations GNSS, envisagées comme moyens préférentiels mais pas exclusivement, fournissent des sources multiples de signaux synchrones et cohérents, ainsi que plusieurs bandes de fréquences de réception, qui offrent une grande variété de conditions d'observation, susceptibles d'augmenter la disponibilité et la précision de la localisation relative desdits échos, mais aussi d'obtenir une perception multidimensionnelle de l'environnement, comme des obstacles ou du relief en 2D ou 3D.

Un intérêt de la solution est de permettre de compléter la capacité de localisation du porteur par une capacité de perception de son environnement proche, notamment des obstacles, sur la base des mêmes signaux que ceux traités au sein du récepteur de localisation.

Un domaine d'application concerne la détection et l'évitement d'obstacles fixes, situés à proximité de plateformes mobiles légères, communément non équipées de dispositifs de détection active d'obstacles.

Un autre intérêt réside dans la simplicité d'estimation du retard entre les signaux directs et réfléchis, réalisée par simple intercorrélation du signal reçu sur une seule et même antenne ponctuelle omnidirectionnelle (recevant à la fois le signal direct et ses échos différés), avec le code local PRN de référence.

**Problème technique**

Le domaine d'application de la présente invention est celui de véhicules ou plateformes mobiles se déplaçant à vitesse faible ou moyenne (typiquement de 10 à 60m/s) telles des drones, des aéronefs légers, des véhicules terrestres, voire des trains

Le problème technique consiste à réaliser une détection et une première localisation d'obstacles fixes situés à proximité du porteur, sur la base desdits signaux d'opportunité non dédiés.

Les portées visées de détection, compatibles de la vitesse des porteurs, sont de l'ordre de quelques centaines de mètres (par exemple, une plage de distance de 300m à 600m dans le cas de drones). L'objectif est de construire, a minima, une image de type radar des obstacles situés dans la zone avant du porteur, leur observabilité dépendant de la distribution des points de réflexion et de leur détectabilité.

Le principe s'appuie sur l'utilisation des signaux de radionavigation ambiants comme sources d'illumination des obstacles, en particulier lorsque ces sources présentent une large disponibilité dans l'espace et dans le temps.

Pour une mise en oeuvre de la méthode dudit radar passif multistatique, appliquée au cas des signaux de radionavigation déterministes, la recherche d'échos diffractés est réalisée par filtrage adapté en retards de temps et en doppler (dits « phases de code et de porteuse »), prédits pour les échos correspondants à un ensemble d'hypothèses de positions de réflexions couvrant la zone à explorer.

La connaissance a priori des caractéristiques des signaux émis et des trajectoires précises des sources d'émission permet de prédéterminer les modulations, retards et dopplers des signaux pour une position connue de réception donnée. Cette même connaissance a priori des signaux émis permet aussi de prévoir les caractéristiques en retard et fréquence des signaux à recevoir lorsque ceux-ci sont préalablement réfléchis par un ou plusieurs obstacles. Ces attributs peuvent être définis en évaluant l'ensemble des chemins parcourus par les signaux entre leurs points d'émission, la ou les surfaces de réflexion et le point de réception. Ces caractéristiques sont déterminées en relatif par rapport à celles des signaux directs reçus, poursuivis par le récepteur, en estimant le retard de propagation et le doppler relatif entre signaux directs et réfléchis.

Par principe, la détermination des positions de réflexion possibles selon une approche multistatique conduit pour chaque source de signal à une surface d'ambiguïté définie par un hyperboloïde de révolution qui dépend des positions relatives de l'émetteur et du récepteur, ainsi que du retard observé entre trajets direct et réfléchi. Ces hyperboloïdes étant différentes pour chaque couple émetteur-récepteur, il est possible de déterminer la position du point de réflexion commun dès la réception de 3 signaux réfléchis, si leurs sources sont convenablement réparties dans l'espace, et si on connait la position de réception.

Les constellations GNSS par exemple permettent de poursuivre simultanément un nombre important de signaux de caractéristiques connues, accroissant ainsi la disponibilité des signaux indirects réfléchis, et donc d'assurer une meilleure continuité de la détection.

Cette approche, basée sur la recherche de coïncidences en retard et en doppler d'un ensemble de signaux indirects réfléchis avec des hypothèses attendues définies selon la géométrie de propagation, se heurte cependant à trois écueils qui en limitent l'efficacité :

- La répartition des sources dans l'espace ne permet pas toujours d'assurer une bonne séparation des surfaces hyperboloïdes qui peuvent alors présenter des zones de tangence ou de recoupement multiples, susceptibles d'entrainer des ambigüités de localisation du point de réflexion, notamment en réception de signaux de puissances disparates, comme cela peut être le cas pour des signaux GNSS reçus pour différentes élévations.
- Les signaux reçus depuis différentes sources d'émission, synchronisées en temps, peuvent momentanément présenter des niveaux d'intercorrélation suffisamment élevés pour être confondus avec des signaux indirects réfléchis, et donc participer à introduire des ambiguïtés supplémentaires susceptibles de perturber la recherche d'un point de coïncidence unique des réflexions,
- Le signal direct présente lui-même des niveaux secondaires de corrélation selon le retard qui peuvent dépasser les niveaux de corrélation des signaux indirects réfléchis, augmentant ainsi le niveau de diffus et la difficulté à en extraire les signaux indirects réfléchis.

Les plages de réglages des traitements de détection et de localisation d'obstacles doivent aussi être envisagées à l'aulne du faible indice de réflexion des obstacles (dimension, matériau, orientation, ...), et du faible niveau de réception des signaux indirects réfléchis après illumination par lesdits signaux d'opportunité.

Le faible niveau des signaux indirects réfléchis nécessite de réduire le plus possible les niveaux de cross corrélations résiduelles en ajoutant une composante spatiale au principe de filtrage adapté temporel et fréquentiel existant.

Dans le cas des signaux GNSS standards, un dimensionnement possible des performances du filtrage spatial, permettant de pallier les écueils mentionnés ci-dessus, présentent les caractéristiques suivantes :

- Un index de directivité d'antenne minimum de 15dBi permettant de remonter le niveau des signaux réfléchis au-dessus du niveau du bruit thermique,

- Un niveau de réjection angulaire du diagramme de directivité d'antenne d'au moins 25dB permettant de réduire le niveau de cross corrélation du trajet direct et des autres sources

- Une capacité du diagramme de directivité à isoler des trajets séparés de moins de 10°

**Etat de la technique antérieure**

Classiquement, les signaux de radionavigation sont conçus pour pouvoir réaliser un transfert de temps entre l'émetteur (constituant la base de temps de référence) et le récepteur, et delà, connaissant la position-vitesse des émetteurs dans le repère spatio-temporel du système, de réaliser l'estimation de la position et de la vitesse du porteur.

Cette capacité de synchronisation établie sur des signaux quasi déterministes tels les signaux de radionavigation, est mise à profit par la solution dudit dispositif de radar passif multistatique décrit dans le brevet [D2], FR3114409 (Revol M., Fourny N. : « Méthode et dispositif de détection passive d'une cible à partir de signaux de radionavigation par satellite », date de dépôt 21.09.20, mise à disposition du public de la demande 25.03.22, bulletin 22/12) considéré ici comme l'état de l'art le plus proche de la présente invention.

Le brevet [D2] décrit une approche basée sur un filtrage adapté selon le retard et le doppler des signaux indirects réfléchis, en relatif par rapport aux signaux directs, pour un ensemble d'hypothèses de positions de réflexion en distance et angle à explorer, dites cellules de réflexion virtuelles, situées à proximité du porteur.

Pour chacun des satellites visibles, on prédit, en vue de réaliser l'intercorrélation avec le signal reçu, un signal local dont le retard et le doppler sont calculés en fonction de la direction de l'écho qui serait potentiellement réfléchi au centre de ladite cellule de réflexion virtuelle selon les distances et les angles, et on cumule les puissances d'intercorrélation sur l'ensemble des satellites.

L'espace couvrant la zone à surveiller à proximité du porteur est ainsi décomposé en cellules en distance et gisement, compatibles avec la seule résolution de la fonction de corrélation du code du signal GNSS utilisé.

La publication [D1] (Glennon E.P et Al : « Feasibility of Air Target Détection using GPS as a Bistatic Radar"; Journal of Global Positioning Systems, vol.5, n° 1&2 décembre 2006 (2006-12-31), page 119-126 XP055811214, AU ISSN: 1446-3156, DOI: 10.5081/jgps.5.1.119) est aussi considérée comme un état de l'art proche mettant en oeuvre le principe bi-statique pour les signaux GPS pour la détection de cibles aériennes. Cet article s'intéresse en particulier aux méthodes de traitement temporel du signal pour réduire le niveau d'intercorrélation entre directs et réfléchis, notamment l'utilisation de solutions basées sur une antenne à haute résolution avec de très faibles lobes secondaires, ou encore des méthodes de soustraction cohérente de signal par projection des vecteurs propres dans un sous-espace orthogonal, qui diffère de l'approche de soustraction directe de la fonction de corrélation du signal direct utilisé par [D2], mettant à profit la connaissance des codes des signaux émis.

**Limitations**

Le brevet [D2] FR3114409 décrit une mise en oeuvre du principe de radar passif multistatique basée sur le filtrage adapté selon les retards et doppler des signaux indirects réfléchis sur lesdites cellules de réflexion virtuelles. Il énonce une solution pour cumuler les puissances des échos reçus d'une même position de réflexion en distance-angle pour un ensemble de signaux GNSS. Cette approche pâtit du niveau faible des signaux réfléchis et du bruit d'intercorrélation du filtrage adapté, lié à la cross corrélation entre le signal indirect réfléchi et le signal direct ou avec les signaux des autres sources.

Ce même brevet [D2] énonce en revendication 1 (306) et (307), une première solution pour réduire de façon simple la cross corrélation entre les signaux directs et réfléchis issus d'une même source, afin d'extraire les seules contributions correspondantes aux trajets réfléchis. La méthode décrite, mettant à profit le déterminisme des codes d'émission des signaux, soustrait à la fonction d'intercorrélation calculée par le récepteur, une estimation théorique de la cross-corrélation entre trajet direct et le code local contenue dans le signal reçu. La cross-corrélation est calculée pour un retard attendu du trajet réfléchi correspondant au parcours supplémentaire du trajet indirect par rapport au direct

Cette solution palliative de soustraction des secondaires d'autocorrélation direct-réfléchis issus d'une même source, ne permet cependant pas de réduire les effets d'intercorrélations de codes entre signaux provenant d'émetteurs différents et reçus avec des angles d'incidence différents.

La publication [D1] cite la mise en oeuvre d'un filtrage spatial par traitement d'antenne dans le but de renforcer le niveau de réception des signaux indirects réfléchis et de dépasser ainsi le plateau des secondaires d'autocorrélation (de -21dB pour les signaux GPS) grâce à l'utilisation d'une antenne à grand gain 35dBi pour atteindre une portée de quelques km. [D1] envisage aussi de réduire le niveau résiduel d'autocorrélation du direct en isolant spatialement le signal direct du signal indirect réfléchi via l'utilisation d'une antenne à pouvoir séparateur important (niveau des secondaires de l'antenne de -30 à -40dB). La publication cite uniquement l'utilisation d'antenne physique (« horn antenna) à grand gain, soulignant la difficulté de mise en oeuvre d'une telle approche, et indiquant que seules les méthodes de réduction de cross-corrélation direct-réfléchis sont envisageables.

**Autres solutions envisageables**

Un mode de réalisation possible du filtrage spatial pour atteindre de tels gains dans des directions multiples consiste à mettre en oeuvre des antennes électroniques à formation de faisceaux. De tels traitements sont en cours de développement dans le contexte des récepteurs GNSS pour des applications critiques et des stations d'observation des signaux au sol. Cependant, les objectifs de gain imposent des dimensions d'antenne contraignantes qui alourdissent les plateformes, complexifient l'architecture des récepteurs, notamment les étages RF, et nécessitent des capacités de calcul importantes

L'alternative, retenue selon l'invention, consiste à réaliser le filtrage spatial par traitement d'antenne dit à synthèse d'ouverture, et non de réaliser le filtrage spatial via un traitement électronique d'antenne réseau classique, encombrant et coûteux en traitement.

Ce traitement permet de réaliser une intégration cohérente à phase stationnaire des signaux dans le domaine spatial, dite intégration cohérente spatiale, sans devoir implanter d'antenne surfacique ou réseau, en se basant sur la connaissance du déplacement du porteur.

Ladite technique de traitement d'antenne à synthèse d'ouvertures appliquée à la réception de signaux déterministes, cohérents dans le temps et l'espace, tels que les signaux GNSS, permet de réaliser une compensation de phase stationnaire en réception, en direction des différentes sources d'émission et de réflexion, et ceci sans nécessiter de traitement de réseau d'antennes.

Une première description de la mise en oeuvre du traitement d'antenne à synthèse d'ouvertures dans le cas des signaux GNSS est énoncée dans le brevet [D5] (EP2410352, Priorité ; 19.07.2010 - FR1003026, Revol M. : « Dispositif d'antenne à ouverture synthétique de réception de signaux d'un système comprenant une porteuse et des moyens de détermination de sa trajectoire» Date de dépôt: 29.06.2011, Date de mise à disposition du public: 25.01.12) dans le but d'améliorer la robustesse de détection et de poursuite des signaux GNSS, pour renforcer l'estimation de position et de temps en présence de sources d'interférence, de leurrage ou de trajets multiples.

Ce traitement est particulièrement bien adapté lorsque le porteur se déplace sur une trajectoire contrainte et qu'il dispose de moyens de localisation propres, par exemple dans le cas d'applications ferroviaires.

Le brevet [D4] (FR 1501416 - Revol M. ; « Procédé de localisation d'une source de brouillage de signaux d'un système de navigation par satellites et système associé », date de dépôt : 03.07.15, date de mise à la disposition du public de la demande : 06.10.17 Bulletin 17/01) décrit, sur le principe de [D5], une solution conjointe réalisant l'exploration angulaire en réception en vue de détecter et localiser des sources d'interférences dans l'environnement de réception des signaux GNSS, via une plateforme mobile.

Le brevet [D3], FR 160 14 49 (Revol M. : « Procédé de localisation ponctuelle d'un véhicule évoluant sur une trajectoire contrainte et système associé », numéro de dépôt : 17194964.7, date de dépôt : 05.10.2017) décrit une réalisation particulière de détection de passage, dite détection de passage à l'affût, réalisant le filtrage adapté du signal reçu avec un ensemble de signaux de référence (dits codes locaux) attendus dont les phases de code et de porteuse, calculées sur la base des positions et des vitesses connues des émetteurs, sont prédites à partir des retards de propagation et des dopplers des signaux directs à recevoir pour un ensemble de positions de réception connues, dites de références.

Il est envisagé comme un moyen supplémentaire pour améliorer la robustesse de la détection et la datation de passage des trains à des positions de référence sur les voies (dites « balises virtuelles »), en utilisant les caractéristiques des signaux GNSS attendus en ces points (méthode dite de « détection de passage à l'affût »).

Ce même principe d'anticipation des phases de code et de porteuse des signaux, appliqué aux signaux directs pour la localisation du porteur dans [D3], est utilisé de façon similaire et étendu au cas des signaux indirects réfléchis pour la localisation d'obstacles illuminés par plusieurs sources synchronisées, telle que décrite par le brevet [D2]

Cependant ces brevets ne décrivent pas de mise en oeuvre dudit traitement d'antenne à synthèse d'ouverture pour la détection des signaux réfléchis par des obstacles

La présente invention réalise une synthèse de ces différentes solutions en vue d'améliorer l'efficacité du fonctionnement d'un radar multistatique passif GNSS.

**Solution au problème**

La présente invention décrit un procédé particulier de détection et de localisation d'obstacles, selon le principe du radar passif multistatique, appliqué auxdits signaux d'opportunité de type GNSS, basé sur la mise en oeuvre d'un filtrage adapté spatial en complément du filtrage adapté en temps et fréquence communément utilisé pour la synchronisation des signaux dédiés au transfert de temps. Ce filtrage spatial est adapté aux directions d'arrivée des signaux indirects définies suivant un ensemble d'hypothèses de position de cellules de réflexion virtuelles, disposées en angles et en distances à proximité de la position du porteur.

Le filtrage adapté spatial réalise un balayage des directions de réflexion couvrant les hypothèses d'angles d'arrivée en gisement des échos par rapport à la direction de déplacement du porteur. Ces directions angulaires sont définies conjointement aux hypothèses de retards et de doppler des signaux indirects réfléchis, établies relativement au temps d'arrivée et aux fréquences de réception des signaux directs poursuivis par le récepteur, sur les mêmes signaux.

Ce principe permet d'améliorer la robustesse de la détection des signaux indirects réfléchis, telle qu'implémentée par simple filtrage adapté temporel & fréquentiel de ces signaux décrit par [D2], en éliminant, grâce au filtrage spatial, les signaux interférents (du signal direct ou d'autres sources d'émission) reçus dans des directions différentes de celles relatives aux points de réflexion attendus.

Ledit traitement d'antenne à synthèse d'ouverture permet non seulement d'améliorer la sensibilité de réception sur les trajets réfléchis, mais aussi d'améliorer simultanément la qualité de la détection et de la poursuite des trajets directs, ceux-ci étant débarrassés des distorsions de corrélation liées aux trajets réfléchis ou des interférences.

Le filtrage adapté spatial complète en cela le traitement de filtrage adapté temporel et fréquentiel tel que décrit par [D2], en assurant une meilleure sensibilité vis-à-vis des signaux reçus et une protection contre les effets des signaux interférents et les trajets multiples.

Aux filtrages adaptés appliqués sur les phases de codes et de porteuses, on ajoute ainsi un filtrage adapté sur les directions d'arrivée des signaux indirects attendus pour la position de la cellule.

On réalise de cette façon un triple filtrage :

-    Dans le domaine des temps, permettant de s'adapter aux retards (phase de code) attendus des signaux indirects réfléchis issus de la cellule de réflexion virtuelle relativement à la position courante du porteur
-    Dans le domaine des fréquences, permettant de s'adapter au doppler (phase de porteuse) des signaux indirects réfléchis issus de la cellule de réflexion virtuelle relativement à la vitesse courante du porteur
-    Dans le domaine des vecteurs d'onde, permettant de s'adapter à la direction des signaux indirects réfléchis issus de la cellule de réflexion virtuelle

Le filtrage adapté spatial par traitement à synthèse d'ouverture permet de définir les angles de visée de l'antenne correspondant aux directions dans lesquelles sera effectuée la détection des signaux.

La fonction du traitement spatial est de réaliser une couverture du secteur choisi des angles en gisement par rapport à la direction de déplacement du porteur, grâce à des voies de directivité de l'antenne à synthèse d'ouverture se recoupant à mieux que -3dB.

Ces voies, calculées en continu et en parallèle, sont fixes en gisement. Les échos, correspondant à des points géographiques fixes, défilent alors selon leur direction et leur distance, ce qui implique d'adapter la durée d'intégration cohérente selon la vitesse de défilement de l'écho dans la cellule, dépendant de la vitesse de déplacement du point de réflexion en relatif au porteur.

Une étape d'intégration cohérente, sur une durée élémentaire constante et identique pour toutes les voies permet de définir la taille apparente de ladite antenne à synthèse d'ouverture, correspondant à la distance parcourue par le porteur pendant la durée d'intégration cohérente.

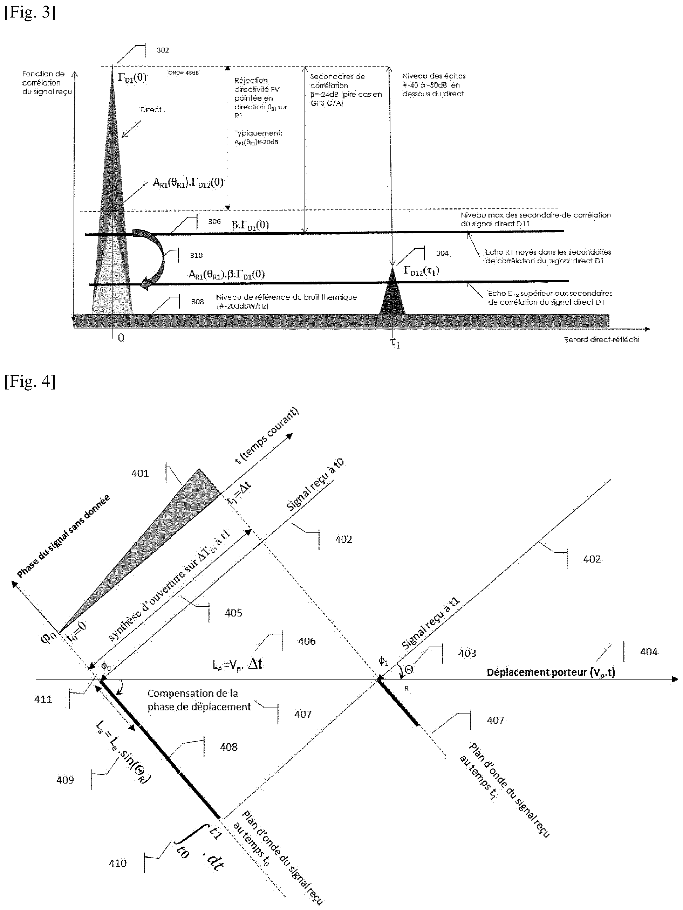

La durée d'intégration cohérente admissible est en principe bornée en valeur supérieure par la durée de cohérence de phase du signal reçu. Typiquement, la durée de cohérence de phase est de 20ms dans le cas d'un signal GPS C/A standard, correspondant au rythme de transition des bits du message de navigation porté par le signal. Cette limitation de la durée d'intégration cohérente de l'antenne représente une contrainte à la conception d'antennes à synthèse d'ouverture dans le cas de porteurs se déplaçant à des vitesses lentes. La présente invention développe une solution selon les descriptions associées aux figures 4 à 11, qui rend la réalisation de l'antenne à synthèse d'ouverture compatible de toutes cadences de transmission des données modulant le signal GNSS, L'approche décrite selon l'invention permet d'ajuster la longueur de l'antenne, et donc son pouvoir séparateur et son gain, indépendamment de la présence de données sur le signal et de la vitesse du porteur.

Le traitement d'intégration cohérente permet ainsi de fournir une estimation du champ de puissance des ondes reçues selon les angles en gisement, réactualisée à chaque période d'intégration cohérente.

Une étape d'intégration non cohérente appliquée après filtrage adapté sur les retards, permet de cumuler le champ de puissance sur des durées adaptées au temps de passage de l'obstacle sous diverses hypothèses d'angle et de distance, en tenant compte de la vitesse courante du porteur, ceci sous l'hypothèse que la trajectoire reste rectiligne pendant la durée d'intégration non cohérente, ou encore sous condition de réaliser l'accumulation non cohérente des puissances selon des directions stables en gisement.

Le récepteur étant accordé sur les fréquences des signaux des satellites, on ne retient que les signaux indirects réfléchis susceptibles d'être reçus au voisinage de ces fréquences de réceptions, après correction du doppler relatif de la porteuse correspondant à la vitesse de déplacement du porteur par rapport à la cellule de réflexion virtuelle, projetée en direction de la source d'émission.

Cependant, les Doppler relatifs dépendant des satellites, le traitement spatial est mené de façon adaptée à chaque satellite poursuivi.

Selon les capacités de calcul du récepteur GNSS, il est possible d'envisager de cumuler les sorties de détection des traitements spatiaux sur l'ensemble ou seulement sur une partie des satellites GNSS.

La durée d'intégration non cohérente de la chaîne de détection dans chacune des voies de visée en gisement de l'antenne à synthèse d'ouverture est adaptée en fonction de la vitesse de défilement du point géographique de réflexion, dans la voie, pour les différentes distances desdites cellules de réflexion virtuelles.

Elle est déterminée à partir de la vitesse du porteur, de la largeur et de la direction en gisement de la voie, et de la distance de la cellule de réflexion virtuelle. A chaque voie est donc associée une batterie d'intégrateurs non cohérents spécifique à la direction en gisement de la voie et aux distances des cellules de réflexion virtuelles.

Le principe fonctionne d'autant mieux que le nombre de satellites visibles simultanément est important et que le pas d'exploration du volume spatial sera plus fin.

## Avantages apportés

La solution décrite par la présente invention vise à améliorer l'efficacité et la disponibilité de la détection d'obstacles mettant en oeuvre des signaux d'opportunité, dans un mode de réalisation où le filtrage adapté est effectué conjointement sur 3 dimensions selon les angles, le temps et la fréquence des signaux reçus.

La solution consiste à ajouter une capacité de filtrage adapté angulaire en sus des filtrages adaptés en retard et en doppler appliqués par les solutions existantes, par exemple décrits par [D1] et [D2], en vue :

- de réduire les possibles ambiguïtés spatiales créées en cas de faible séparation des hyperboloïdes de résolution distance-angle, dans les cas de faible dilution géométrique des directions satellites,
- de réduire le niveau d'intercorrélation entre codes d'étalement de sources différentes, en isolant spatialement les signaux reçus issus des différentes sources, si leurs directions sont suffisamment séparées (en fonction de l'ouverture angulaire des voies de directivité formées)
- de réduire le niveau d'autocorrélation du code d'étalement entre le trajet direct et les trajets réfléchis, issus de la même source, en isolant spatialement le trajet direct et les trajets réfléchis quand leurs directions sont suffisamment séparées
- d'augmenter le rapport signal à bruit (CN0) en réception en direction des signaux attendus (trajets réfléchis indirects, éventuellement étendus aux trajets directs) afin d'améliorer la confiance sur la détection des obstacles, caractérisée par la Pnd et la Pfa.

Ledit traitement d'antenne passive à synthèse d'ouverture appliqué à la réception des signaux GNSS apporte une alternative à cette complexité, puisqu'il peut être réalisé à partir d'une seule antenne élémentaire, limitant ainsi l'accroissement de la complexité de traitement du récepteur. Il tire parti du déplacement connu du porteur (par exemple à partir d'une orbitographie dans le cas d'un satellite, ou d'une référence inertielle, voire d'un référencement cartographique) et de la cohérence temporelle de la phase du signal pour créer une antenne virtuelle à synthèse d'ouverture. Ce principe vaut pour tous types de signaux cohérent et à phase stationnaire, et se trouve particulièrement adapté pour les signaux GNSS.

En outre, le traitement d'antenne à synthèse d'ouverture permet d'obtenir des gains de directivité potentiellement plus importants dans les directions visées, que ceux atteints par des antennes réseaux, en raison des contraintes de taille et de nombre d'antennes élémentaires qui seraient alors nécessaires de satisfaire. Non seulement il améliore la sensibilité de réception sur les trajets directs des signaux reçus, mais permet également de détecter et d'isoler les trajets réfléchis dans les autres directions. En raison de la simplicité du traitement d'antenne à synthèse d'ouverture, qui se réduit à une intégration cohérente du signal corrigé en phase de porteuse, il est possible d'effectuer un suivi en parallèle, dans plusieurs directions d'arrivée, des signaux directs (associés à chaque satellite) et aussi des signaux indirects réfléchis (sur des obstacles), ceci avec une charge de traitement moindre que pour le traitement d'une antenne réseau.

Le récepteur radar passif GNSS à synthèse d'ouverture correspond ainsi à un récepteur GNSS augmenté, nécessitant un plus grand nombre de corrélateurs par rapport aux récepteurs classiques, mais reste dans le domaine d'utilisation, de savoir-faire et des technologies utilisées classiquement pour le développement des récepteurs de positionnement par transfert de temps.

**Brève description des figures**

L'invention sera mieux comprise à la lecture de la description de plusieurs formes de réalisation qui va suivre, donnée à titre d'exemple et faite en se référant aux dessins sur lesquels :

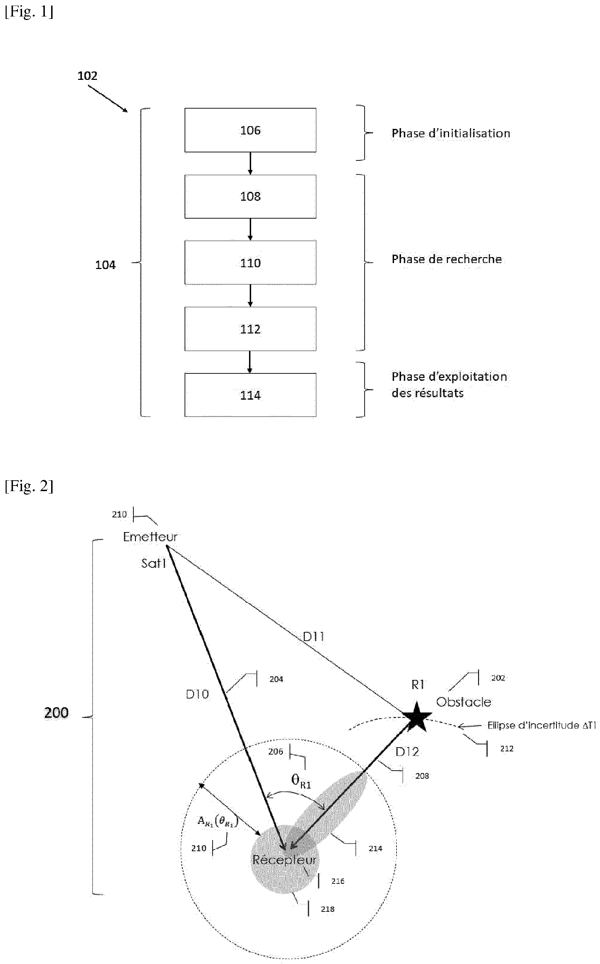

[Fig.1] présente le mode de réalisation le plus général du procédé de détection d'obstacles, basé sur la mise en oeuvre d'un filtrage adapté conjoint en angle-distance et doppler des signaux indirects réfléchis, selon un quadrillage de l'espace proche du porteur par un ensemble de cellules de réflexion virtuelles définies selon les angles en gisement et selon la distance radiale

[Fig.2] illustre le principe de filtrage conjoint en angle-distance des signaux indirects réfléchis, dans une mise en oeuvre où la position de l'émetteur et du récepteur sont connues, pour lequel le filtrage adapté spatial est réalisé par formation de voie de directivité d'antenne orienté en direction de la cellule de réflexion virtuelle

[Fig.3] illustre le gain apporté par le traitement de formation de voie pour réduire le niveau d'intercorrélation du signal indirect réfléchi avec le signal direct

[Fig.4] illustre le principe de remise en cohérence de la phase du signal reçu selon le déplacement du porteur, de sorte à créer ladite antenne à synthèse d'ouverture, la compensation de phase permettant de maintenir constante la phase du signal sur la longueur apparente de l'antenne correspondant à la durée totale de ladite intégration cohérente spatiale.

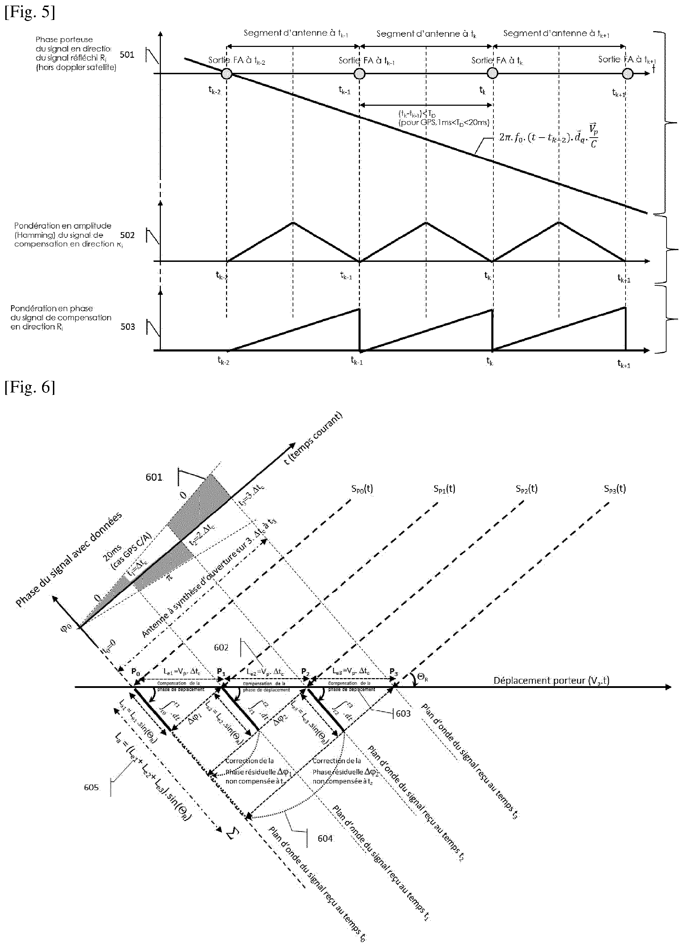

[Fig.5] présente un chronogramme, selon l'invention, illustrant les opérations de pondération en phase et en amplitude appliquées sur le signal réfléchi R(t) pour obtenir l'effet d'antenne à ouverture de synthèse

[Fig.6] illustre le principe selon l'invention de remise en cohérence de la phase du signal reçu selon le déplacement du porteur permettant de créer ladite antenne à synthèse d'ouverture, compatible d'une période de modulation des données plus courte que la durée totale de ladite intégration cohérente spatiale.

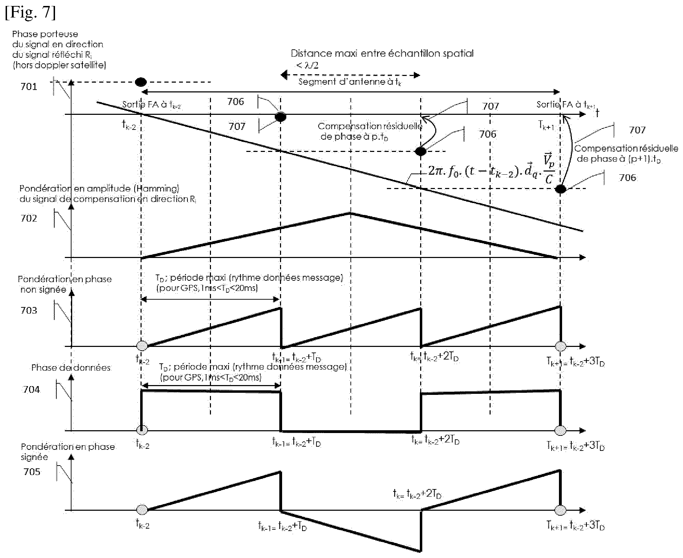

[Fig.7] décrit un chronogramme selon l'invention, similaire au chronogramme en [Fig.5], illustrant les différentes modulations appliquées sur le signal reçu dans le cas d'une période de modulation des données connues a priori, plus courte que la durée totale de ladite intégration cohérente spatiale. Il présente une alternative aux limitations d'intégration cohérente présentées lorsque le signal GNSS ne dispose pas de voie pilote.

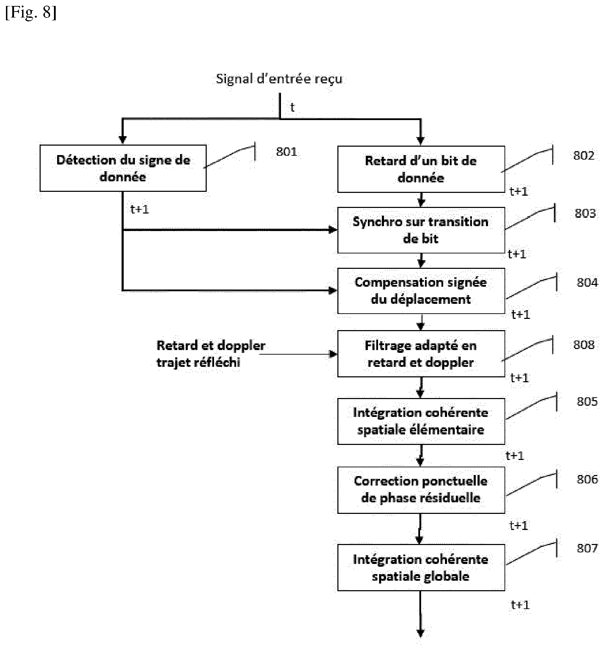

[Fig.8] présente selon un premier mode de réalisation de l'invention, le principe de correction de la phase de données dit correction de l'état de phase de donnée avec latence, dans l'exemple d'une modulation de phase B-PSK, suivant lequel le signal reçu est globalement retardé sur une durée au moins égale de la durée d'un bit de donnée, plus un laps de temps faible permettant au récepteur GNSS de détecter, en parallèle et en anticipation au traitement retardé, l'état de phase de la donnée.

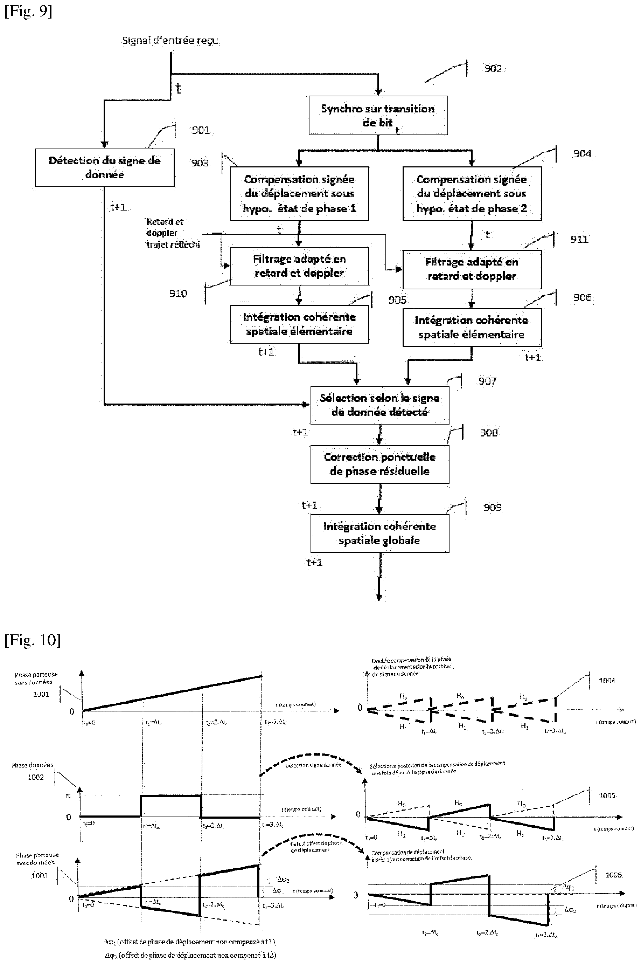

[Fig.9] présente selon un autre mode de réalisation de l'invention, le principe de correction de la phase de données, dit correction de l'état de phase de donnée sans latence, dans l'exemple d'une modulation de phase B-PSK, suivant lequel les deux hypothèses de signe de la donnée courante sont retenues pour calculer en parallèle et en continu au temps courant (t) sur chaque tronçon élémentaire d'antenne sur chaque période de données, lesdites compensations relatives de la variation de phase de porteuse

[Fig.10] est un chronogramme illustrant, pour ladite correction de l'état de phase de donnée sans latence, les différentes modulations appliquées sur le signal reçu dans l'exemple d'une modulation des données B-PSK inconnues a priori, de période plus courte que la durée totale de ladite intégration cohérente spatiale

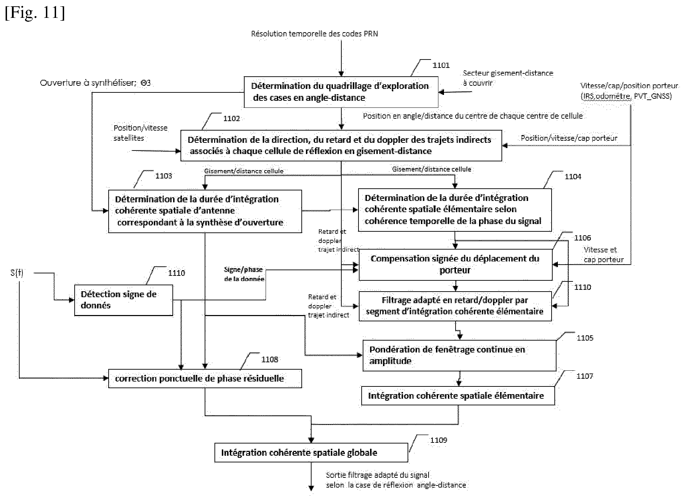

[Fig.11] décrit une approche selon l'invention pour régler les paramètres de traitement temps réel en fonction de la vitesse du porteur et du secteur à couvrir par la mire radar, tel que le nombre de cellules de réflexion virtuelles du quadrillage, les durées d'intégration élémentaires et d'antenne en fonction de la vitesse de déplacement du porteur, de la largeur angulaire de la voie de directivité attendue et de la résolution temporelle des codes d'étalement.

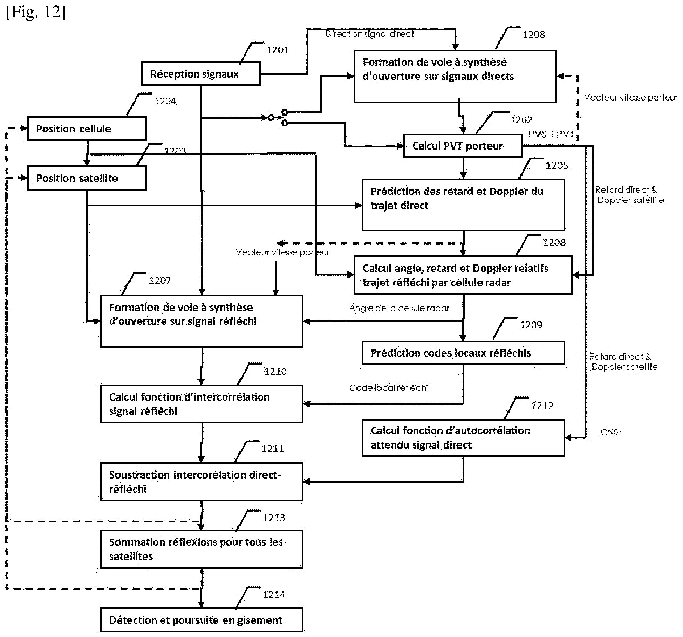

[Fig.12] présente un mode de réalisation particulier, mais pas limitatif, du traitement de radar passif multistatique GNSS en angle-retard et doppler, précisant la place du traitement de formation de voies à synthèse d'ouverture dans l'architecture d'ensemble

**Solution technique**

La solution technique selon l'invention a pour objet :

Un procédé de détection et de localisation passif d'obstacles appliqué en réception des trajets de propagation directs et indirects de signaux à étalement de spectre, cohérents et synchronisés, transmis par des sources d'émission distinctes, le dit procédé réalisant un filtrage adapté global des signaux reçus, portant conjointement sur les angles, les retards et les dopplers attendus en réception des trajets indirects correspondant aux signaux réfléchis selon un ensemble d'hypothèses de positions d'obstacles qui décomposent l'environnement proche de l'antenne de réception en une pluralité de cellules de réflexion quadrillant l'espace en gisement-distance , procédé dit de détection à l'affût en angle-retard et doppler, ledit procédé de détection consistant : -a) à estimer la puissance reçue cumulée, après filtrage adapté global conjoint, des signaux indirects réfléchis pour chacune des hypothèses de position d'obstacles définies par les cellules de réflexion,- b) à extraire les maxima de puissance dans ledit quadrillage et - c) à les poursuivre dans le temps en gisement et distance.

Un procédé de détection et de localisation d'obstacles caractérisé en ce que le filtrage adapté sur les angles de réception des signaux réfléchis, dit filtrage adapté spatial, participant au filtrage adapté global des signaux reçus, est mis en oeuvre par formation d'un ensemble de voies de directivité orientées selon les directions des cellules de réflexion, fixes en gisement par rapport à la direction de déplacement du véhicule porteur de l'antenne de réception des signaux, dit le porteur, définissant les directions d'incidence attendues des trajets des signaux indirects réfléchis, pour maximisation de la puissance multi-trajets reçue.

Un procédé de détection et de localisation d'obstacles , caractérisé en ce que la formation d'un ensemble de voies de directivité fixes en gisement est réalisé par intégration, dite intégration cohérente spatiale des signaux reçus , consistant à appliquer sur la phase du signal reçu, avant l'intégration cohérente temporelle, une compensation correspondant à la projection du déplacement du porteur sur la direction fixe en gisement attribuée à chacune des voies de directivité, la dite intégration cohérente spatiale réalisant un traitement de filtrage spatial mono antenne dit traitement d'antenne à synthèse d'ouverture.

Un procédé pour lequel la phase modulée N-PSK de codage des messages des signaux reçus, qui définit les N états possibles de la donnée élémentaire, dont le rythme de modulation détermine la durée de cohérence de phase élémentaire du signal, est corrigée préalablement à la compensation du déplacement du porteur, ladite correction de phase de la donnée étant caractérisée en ce qu'elle soit menée selon l'un ou l'autre des principes suivants ;

    i. Correction de la phase de donnée du signal selon le principe dit de correction de l'état de phase de données avec latence, pour laquelle le signal reçu est globalement retardé sur une durée au moins égale de la durée d'un bit de donnée, plus un laps de temps faible permettant de détecter l'état de phase de la donnée

    ii. Correction de la phase de donnée du signal selon le principe dit de correction de l'état de phase de donnée sans latence, pour laquelle les N hypothèses de l'état de phase de la donnée, modulée en N-PSK, sont traitées en temps réel en parallèle, puis le résultat de compensation du déplacement du porteur est sélectionné après coup avec une faible latence, une fois détecté l'état de phase de la donnée, ceci avant intégration.

Un procédé de détection et de localisation d'obstacles, caractérisé en ce que ledit traitement d'antenne à synthèse d'ouverture forme à la fois les voies de directivité en gisement orientées pour détecter les signaux des trajets réfléchis sur le ou les obstacles, et des voies de directivités orientées en direction des trajets directs des signaux reçus.

Un procédé de traitement d'antenne à synthèse d'ouverture, suivant ledit principe de correction de l'état de phase de donnée avec latence, caractérisé en ce que ladite intégration cohérente spatiale appliquée en temps continu sur le signal reçu, comporte :

    i. Une détection préalable, au fil du temps réel, de l'état de phase de la donnée courante, réalisée au rythme de la modulation N-PSK des données pour chacun des signaux reçus

    ii. L'application d'une latence globale sur le signal en entrée dudit traitement d'antenne à synthèse d'ouverture, égale à la durée d'un bit de donnée du signal plus une latence supplémentaire réduite nécessaire à la détection de l'état de phase de la donnée.

    iii. La synchronisation, dudit traitement à synthèse d'ouverture sur une époque de transition de phase des données du signal, pour chacun des signaux poursuivis, dit signal d'entrée retardé synchronisé

    iv. Une correction de la phase dudit signal d'entrée retardé synchronisé, compensée selon l'état détecté de la phase de la donnée, correspondant au déplacement du porteur projeté orthogonalement dans la direction de chaque voie formée, et appliquée par segments de longueur maximale définie par la durée de cohérence de phase du signal, dits segments d'intégration cohérente spatiale élémentaires

    v. Une compensation de la phase de donnée ponctuelle complémentaire, correspondant à la phase du signal de corrélation au début de chaque segment d'intégration cohérente spatiale élémentaire, dite correction ponctuelle de phase résiduelle, appliquée sur les sorties successives des segments d'intégration cohérente spatiale élémentaires pour ledit signal compensé sélectionné, lorsque la durée de ladite intégration cohérente spatiale dépasse la durée de cohérence de phase du signal,

    vi. Une pondération de fenêtrage en amplitude correspondant à la durée de ladite intégration cohérente spatiale pour réduire le niveau des secondaires de la fonction de directivité spatiale résultante.

Un procédé de traitement d'antenne à synthèse d'ouverture suivant ledit principe de correction de l'état de phase de donnée sans latence, caractérisé en ce que ladite intégration cohérente spatiale, appliquée en temps continu sur le signal reçu, comporte :

i. La synchronisation, dudit traitement à synthèse d'ouverture sur une époque de transition de phase des données du signal, pour chacun des signaux poursuivis, dit signal d'entrée synchronisé

ii. N corrections en parallèle, pour chacun des états de phase N-PSK de donnée, de la variation de phases de porteuse dudit signal d'entrée synchronisé, lesdites corrections correspondant au déplacement du porteur projeté orthogonalement dans la direction de chaque voie formée, et étant appliquées par segment d'intégration cohérente spatiale élémentaires de longueur maximale définie par la période des données du signal

iii. Une intégration cohérente spatiale élémentaire du signal compensé pour chacun des états de phase de donnée

iv. Une détection de l'état de phase de la donnée courante, menée parallèlement à la compensation de déplacement, réalisée après la fin de la donnée pour chacun des signaux reçus

v. Une sélection a posteriori du résultat d'intégration cohérente spatiale élémentaire du signal compensé, dit signal compensé sélectionné, selon l'état de phase détecté de la donnée

vi. Une compensation ponctuelle complémentaire de la phase de donnée, dite correction ponctuelle de la phase de donnée, appliquée sur les sorties successives des segments d'intégration cohérente spatiale, pour ledit signal compensé sélectionné, lorsque la durée de ladite intégration cohérente spatiale dépasse la durée de cohérence de phase du signal,

vii. Une pondération de fenêtrage en amplitude correspondant à la durée de ladite intégration cohérente spatiale pour réduire le niveau des secondaires de la fonction de directivité spatiale résultante.

Un procédé, pour lequel les durées d'intégration cohérente spatiale et d'intégration cohérente spatiale élémentaire sont adaptées pour synthétiser l'ouverture angulaire de la figure de directivité attendue en fonction de la vitesse du porteur, et du pas d'échantillonnage spatial des segments d'antenne élémentaire, selon les étapes suivantes :

i. Détermination de la longueur apparente de l'antenne en fonction de l'objectif d'ouverture à -3dB du lobe principal de directivité de l'antenne

ii. Détermination de la durée de ladite intégration cohérente spatiale correspondant à la longueur de déplacement parcourue par le porteur pendant la durée de ladite intégration cohérente spatiale, la vitesse du porteur étant connue,

iii. Détermination de la durée de ladite intégration cohérente spatiale élémentaire maximum correspondant à la valeur minimum entre -a) la durée de cohérence de phase du signal, liée au rythme de transmission des données des messages contenus dans le signal -b) la durée correspondant à une distance parcourue par le porteur de moins d'une demi-longueur d'onde du signal

iv. si la durée de ladite intégration cohérente spatiale est plus longue que la durée de ladite intégration cohérente spatiale élémentaire, notamment dans le cas d'un porteur se déplaçant lentement: -a) découpage de l'antenne à synthèse d'ouverture en segments élémentaires d'antenne correspondant chacun à la durée de ladite intégration cohérente spatiale élémentaire, puis, -b) compensation complémentaire effectuée par recalage ponctuel de la phase résiduelle correspondant au déplacement du porteur pendant la durée de ladite intégration cohérente spatiale élémentaire

v. Sommation, sur le nombre de segments élémentaires d'antenne, des sorties de filtrage adapté correspondant aux segments élémentaires d'antenne sur la durée d'intégration cohérente, corrigées de la phase résiduelle.

Un dispositif de détection et de localisation passif d'obstacles appliqué en réception des trajets de propagation directs et indirects de signaux à étalement de spectre, cohérents et synchronisés, transmis par des sources d'émission distinctes, le dit procédé réalisant un filtrage adapté global des signaux reçus, portant conjointement sur les angles, les retards et les dopplers attendus en réception des trajets indirects correspondant aux signaux réfléchis selon un ensemble d'hypothèses de positions d'obstacles qui décomposent l'environnement proche de l'antenne de réception en une pluralité de cellules de réflexion quadrillant l'espace en gisement-distance , ainsi que :-a) des moyens d'estimation de la puissance reçue cumulée, après filtrage adapté global conjoint, des signaux indirects réfléchis pour chacune des hypothèses de position d'obstacles définies par les cellules de réflexion, -b) des moyens d'extraction des maxima de puissance dans ledit quadrillage et -c) des moyens de localisation réalisant la poursuite des maxima de puissance en gisement et distance selon le temps.

Un dispositif de détection et de localisation passif d'obstacles comprenant un récepteur de signaux et une unité de calcul configurée pour exécuter les étapes des procédés de détection et localisation

## Description détaillée

La description de l'invention est détaillée dans les paragraphes suivants selon différentes figures qui en précise le principe [Fig.1], un mode de réalisation général [Fig.2] , les gains attendus par rapport à l'existant [Fig.3], des illustrations du principe dudit traitement d'antenne à synthèse d'ouverture [Fig.4], [Fig.5] , les options de mise en oeuvre du traitement selon la durée de cohérence de phase des signaux reçus relativement à la durée d'intégration cohérente de l'antenne [Fig.6] et [Fig.7], les principes du traitement d'antenne à ouverture de synthèse en présence de données [Fig.8], [Fig.9] et [Fig.10], les contraintes de réglages des paramètres de traitement selon différents mode de mise en oeuvre [Fig. 11] et enfin un mode de réalisation préféré [Fig.12].

[Fig.1] présente le mode de réalisation le plus général du procédé de détection d'obstacles par filtrage adapté conjoint en angle-distance et doppler des signaux indirects réfléchis, selon un quadrillage de l'espace proche du porteur. Le procédé selon l'invention comprend un ensemble (102) d'étapes, configurées pour mettre en oeuvre une stratégie de détection d'obstacles par filtrage adapté conjoint en angle-distance et doppler.

L'ensemble (104) des étapes du procédé général de détection d'obstacle par filtrage adapté conjoint en angle, retard et Doppler comprend une phase d'initialisation dans une première étape (106), une phase de filtrage adapté spatial selon les angles d'arrivée des signaux avec les directions, suivie d'une phase de filtrage adapté sur les retards et dopplers attendus des signaux réfléchis, définies selon le quadrillage des cellules de réflexion virtuelles dans des deuxième, troisième, quatrième étapes (108), (110), (112), et une phase de détection et de poursuite des échos incluant une cinquième étape (114).

Dans la première étape (106) d'initialisation générique à tous les modes de réalisation, un premier ensemble de positions des cellules de réflexion virtuelles est déterminé en fonction du domaine de surveillance choisi en angle de gisement et distance et de la vitesse du porteur, en relatif par rapport à la position et à la direction de déplacement du porteur. La largeur angulaire des cellules de réflexion virtuelles, et donc leur nombre, est déterminée par la résolution angulaire de ladite antenne à synthèse d'ouverture, elle-même tributaire de la vitesse du porteur et de la durée d'intégration cohérente atteignable.

Pour cette même première étape (106) d'initialisation, le temps système courant, la position et le vecteur vitesse du porteur sont supposés être fournis en temps réel par un dispositif extérieur à l'invention, par exemple un récepteur GNSS, sans contrainte majeure sur la précision de ces estimations (typiquement quelques 10aines de mètres en position, quelques 0.1 mis en vitesse, quelques μs sur la datation).

Toujours dans la première étape (106) d'initialisation, un deuxième ensemble de données correspondant aux positions des sources d'émission des signaux visibles au temps courant est calculé pour chaque source d'émission supposée en déplacement.

La seconde étape (108) comporte de façon générique le calcul du retard et du doppler apparent de l'émetteur du signal réfléchi attendu pour chaque cellule de réflexion virtuelle et pour chacun des émetteurs visible, établi au temps courant à partir des positions connues des sources d'émission, et de la direction de déplacement du porteur.

La troisième étape (110) correspond, dans les directions d'arrivée des signaux indirects définies par le quadrillage en cellules de réflexion virtuelles, aux différentes stratégies possibles de réalisation du filtrage spatial relatives notamment à la détermination des durées d'intégration cohérente selon la vitesse du porteur et de la zone à couvrir, et selon différents modes de réalisation décrits ultérieurement par la présente invention, avec ou sans filtrage des signaux directs, et avec ou sans soustraction de l'intercorrélation direct-réfléchi.

Dans une quatrième étape (112), optionnelle, consécutive à la quatrième étape (110), le calculateur électronique réalise la soustraction sur les signaux réfléchis de la contribution de l'autocorrélation du signal direct.

Ensuite, dans la cinquième étape (114), le calculateur réalise la détection de maxima locaux pour les cellules de réflexion virtuelles dans le domaine gisement-distance, et en effectue la poursuite dans le temps.

Les figures suivantes décrivent en détail les différents modes de réalisation selon l'invention.

[Fig.2] illustre le principe de fonctionnement d'un filtrage conjoint en angle-distance des signaux indirects réfléchis, dans une mise en oeuvre où la position de l'émetteur (210) et du récepteur (216) sont connues, pour lequel le filtrage adapté spatial est réalisé par formation de voie de directivité d'antenne (214) orientée en direction de la cellule de réflexion virtuelle $R_1$ (202) correspondant à une hypothèse de position d'obstacle. Le niveau du signal direct $D_{10}$ (204) dont l'angle d'incidence est séparé de $\theta_{R1}$ (206) de la direction du signal réfléchi $D_{12}$ (208) est ainsi atténué de $A_{R1}(\theta_{R1})$ (210) en puissance, correspondant au niveau des secondaires de directivité de l'antenne (218) par rapport au signal réfléchi, réduisant ainsi d'autant le niveau résiduel de l'autocorrélation du direct. Le niveau des premiers secondaires d'une antenne linéaire, telle que l'est l'antenne à ouverture de synthèse, est de -13dB sans pondération spatiale, ce qui n'est pas suffisant pour combler le déficit entre le niveau du signal réfléchi et le niveau des secondaires d'autocorrélation des signaux directs. Le niveau de réjection de l'antenne, en dehors de son lobe principal, peut être encore être réduit par une pondération de type Triangulaire ou de Hamming, dite pondération de fenêtrage, permettant d'atteindre un plateau de niveau des secondaires de l'ordre de - 30dB à -40dB.

Le signal temporel issu de la voie de directivité ainsi formée peut ensuite être traité par un filtre adaptatif en retard et doppler.

[Fig.3] illustre l'impact, sur la fonction de corrélation du signal reçu avec le code local attendu, de la réjection spatiale $A_{R1}(\theta_{R1})$ du trajet direct entrainée par une formation de voie pointée en direction $\theta_{R1}$ d'un signal indirect réfléchi, issue de la cellule R1.

où

- $\Gamma_{D1}(0)$ ; (302) la puissance du signal direct D 11, dans le signal reçu
- $\Gamma_{D12}(\Delta\tau_1)$; (304) la puissance du signal indirect réfléchi retardé de $\Delta\tau_1$ par rapport au direct, dans le signal reçu
- $\beta.\Gamma_{D1}(0)$; (306) le niveau des secondaires d'autocorrélation du signal direct (de l'ordre de -24dB par rapport à la puissance reçue du direct), pour lequel, typiquement, $\Gamma D_{12}(\Delta\tau_1) > \beta.\Gamma_{D1}(0)$
- $A_{R1}(\theta_{R1})$; (310) le niveau de réjection spatiale apporté par la fonction de directivité d'antenne en direction du trajet direct, séparé de $\theta_{R1}$ par rapport à la direction du trajet indirect réfléchi, pour lequel,

$$\Gamma_{D_{12}}(\Delta\tau_1) > A_{R_1}(\theta_{R_1}).\beta\Gamma_{D_1}(0)$$

- Typiquement, l'application de ladite pondération de fenêtrage permet de réduire le niveau des secondaires de la fonction de directivité à #-30dB par rapport à la direction du signal dans la voie.
- $N_0$ ; (308) est le niveau du bruit thermique, typiquement de -203 dBW dans des conditions de réception standard. Le traitement de formation de voie d'antenne permet d'améliorer aussi le rapport signal à bruit thermique, d'un gain égal à l'index de directivité de l'antenne, définit par ( $\frac{L}{\lambda/2}$ ), où L est la longueur apparente de l'antenne dans la direction visée (soit, typiquement, $10\log(3/0,15) = 13$dB)

[Fig.4] illustre le principe de remise en cohérence de la phase du signal reçu selon le déplacement du porteur, de sorte à créer ladite antenne à synthèse d'ouverture, la compensation de phase permettant de maintenir constante la phase du signal sur la longueur apparente de l'antenne correspondant à la durée totale de ladite intégration cohérente spatiale.

La figure montre le lien existant entre la durée d'intégration cohérente du filtrage adapté spatial obtenu par compensation de la variation de la phase de porteuse reçue selon le déplacement du porteur et la longueur apparente de l'antenne projetée dans la direction du signal.

La figure souligne aussi l'importance que le signal reçu soit à phase cohérente (l'écart de phase entre deux points de l'espace est uniquement lié au retard de propagation du plan d'onde entre ces deux points) et stationnaire (la référence de phase est constante à l'émission), afin d'assurer l'équivalence entre les évolutions de phase temporelle et spatiale

**[0105]** - L'étape (401) représente la variation de phase de porteuse du signal reçu en fonction du temps, liée au seul déplacement du porteur relativement à la direction d'arrivée du signal, les autres contributions à la variation étant supposées parfaitement connues par ailleurs (par exemple, le déplacement de l'émetteur via les éphémérides des satellites) ou modélisées (par exemple, les variations de cohérence code-porteuse via des modèles de propagation ionosphérique). La phase de porteuse du signal émis est supposée parfaitement cohérente et stationnaire

Les autres éléments de la figure représentent l'évolution de la phase du signal reçu en fonction du déplacement du porteur, toute autre effet créant une variation de phase étant supposé compensé par modèles.

- L'étape 404) représente le déplacement du porteur à la vitesse $V_p$ en fonction du temps
- L'étape (402) représente la direction du signal reçu à différent instants t0, t1, ...tn
- A l'étape (403), $\Theta_R$ représente l'angle d'incidence du signal reçu par rapport à la direction de déplacement du porteur à l'instant courant
- A l'étape (405), $\Delta T_c$ représente la longueur du signal pour la réalisation de chaque échantillon par intégration cohérente
- L'étape (406) Le représente la longueur équivalente de l'antenne synthèse d'ouverture ; $L_e = V_p.\Delta T_c$
- L'étape (407) Représente l'opération de compensation de la phase $\phi$ de déplacement du signal reçu, réalisée en soustrayant à haute cadence, l'évolution de phase instantanée du déplacement, mesurée par ailleurs, à la phase reçue (401)
- L'étape (408) représente la phase du signal compensée, maintenue à la phase $\phi_0$ du signal à l'instant $t_0$ pendant la durée $\Delta T_c$ de synthèse d'ouverture, équivalente à un plan d'onde orthogonal à la direction d'incidence du signal
  La compensation de phase est réalisée en relatif par rapport à la phase initiale $\phi_i$ à l'instant initial $t_i$, sur des segments élémentaires courts $\Delta T_c$ ce qui permettent de limiter l'impact d'éventuelles divergences à long terme du capteur de référence utilisé pour la mesure du déplacement
- L'étape (409) $L_A$ représente la longueur apparente de l'antenne synthèse d'ouverture ainsi générée sur la durée $\Delta\tau$

- L'étape (410) représente l'opération d'intégration cohérente du signal entre les instants t0 et t1, intégrant la phase reçue compensée sur la longueur du déplacement. C'est précisément cette intégration du signal reçu à phase constante sur la longueur du déplacement qui permet d'obtenir un effet d'antenne, l'intégration temporelle étant ici équivalente à une intégration cohérente spatiale, fournissant une directivité équivalente à celle qu'aurait une antenne continue de longueur $L_A$, placée perpendiculairement à la direction d'arrivée du signal.

La compensation de phase étant réalisée en relatif par rapport à la phase initiale de début de cycle de synthèse d'ouverture correspondant au segment d'intégration cohérente spatiale élémentaire, la phase du signal résultant du filtrage d'antenne à chaque instant de sortie $t_i$ correspond à la phase $\phi_i$ du signal d'entrée à chaque début de segment d'intégration cohérente spatiale élémentaire

[Fig.5] présente un chronogramme, selon l'invention, illustrant les opérations de pondération en phase et en amplitude appliqué sur le signal réfléchi R(t) pour obtenir l'effet d'antenne à ouverture de synthèse.

[0109] - L'étape (501) représente l'évolution continue de la phase du signal reçu par rapport à une phase d'origine prise au temps $t_k$-1, en fonction du déplacement du porteur avant compensation de la phase :

$$\delta\varphi_{(pq)}(t) = 2\pi . f_{0} . (t - t_{k-1}) . \vec{d_q} . \frac{\vec{V_p}}{C}$$

Une telle évolution continue, telle que présentée sur la [Fig.5], exclut toute transition de phase liée à la modulation des données sur les signaux GNSS, pendant la durée totale de ladite intégration cohérente spatiale, supposant ainsi soit que le signal n'a pas de données (c'est le cas des voies pilotes du GNSS), ou encore, que les cycles de synthèse d'ouverture, correspondant aux segments d'intégration cohérente spatiale élémentaire, sont synchronisés avec la phase des données, et que la période des données est au moins aussi longue que la période de synthèse d'ouverture.

[0111] - L'étape (502) représente ladite pondération de fenêtrage en amplitude, appliquée simultanément à la compensation de phase de déplacement sur le signal à intégrer spatialement, destinée à réduire le niveau des secondaires de la fonction de directivité spatiale, afin d'assurer une meilleure isolation du signal indirect réfléchi avec le signal direct. Cette pondération en amplitude symétrique est appliquée sur la durée de l'intégration cohérente en même temps que la compensation de phase. A titre d'exemple non limitatif, elle peut être de type Hamming, triangulaire, Hann, Blackman-Harris.

$$\delta\varphi_{(pq)}(t) = \left( -2\pi . f_{0} . (t - t_{k-1}) . \vec{d_q} . \frac{\vec{V_p}}{C} \right)$$

- L'étape (503) représente la compensation de phase relative - appliquée sur le signal reçu pendant la durée $\Delta T_c$ d'intégration cohérent ($\Delta T_c = t_k - t_{k-1}$) du filtrage adapté, correspondant au segment d'antenne synthétisé.

En effet, en prenant l'hypothèse que, de façon typique, l'ouverture à -3dB des voies ($2\theta3$) ne doit pas dépasser 10° pour assurer une isolation de trajets proches en angle, alors la longueur apparente ($L_a$) de l'antenne ne doit pas être inférieure à #1,5 m (en utilisant la formule approchée de l'ouverture $2\theta3#50.\lambda/L_a$, pour une antenne linéaire). De là, on déduit que la vitesse minimale pour parcourir 1,5m en 20ms est de 75m/s (270km/h), ce qui limiterait l'application du principe au domaine aéronautique ou aux applications ferroviaires à grande vitesse dans le cas d'un système utilisant les signaux GPS C/A.

Cependant, la durée d'intégration cohérente par segment $\Delta T_c$ peut ne pas être limitée par la cadence des données dans le cas des nouveaux signaux GNSS qui sont munis de voie pilotes sans modulation de données, disposant de codes périodique longs (typiquement 100ms dans le cas des signaux Galileo). Dans ce cas, la durée d'intégration cohérente n'est plus limitée par les changements de phase des données. La vitesse minimale du porteur pour générer une ouverture de voie à 10° n'est alors plus que 54km/h si on applique une intégration cohérente de 100ms, ou encore 11 km/ h pour une intégration cohérente de 0,5s.

Malgré cette capacité portée par les nouvelles constellations, à la date présente, le signal GPS C/A reste le seul service pouvant être utilisé dans des systèmes de navigation appelés à être certifiés par des autorités, étant le seul à pouvoir garantir l'intégrité des signaux.

Aussi, pour que la mise en oeuvre du principe de l'invention aux systèmes de navigation certifiés ne soit pas limitée à des porteurs se déplaçant à haute vitesse, et aussi pour rester robuste à de possibles augmentations, du rythme des données pour les futures constellations GNSS, ou encore pour permettre une adaptation à des signaux qui seraient dédiés à la communication et non plus au positionnement, l'invention développe par la suite [Fig.6], [Fig.7][Fig.8] et [Fig.9] une méthode permettant de réaliser l'intégration cohérente de ladite antenne à synthèse d'ouverture sur des durées supérieures à la période des données.

L'invention révèle aussi [Fig.9] une méthode de réglage des durées d'intégration cohérentes d'antenne et élémentaire capables l'adaptation du traitement à la vitesse de déplacement du porteur.

[Fig.6] illustre le principe selon l'invention de remise en cohérence de la phase du signal reçu selon le déplacement du porteur permettant de créer ladite antenne à synthèse d'ouverture, compatible d'une période de modulation des données plus courte que la durée totale de ladite intégration cohérente spatiale.

Dans ce mode de fonctionnement, la durée d'intégration cohérente spatiale élémentaire est limitée par la durée de cohérence de phase du signal reçu en raison de la présence de données (typiquement avec une période de 20ms dans le cas GPS).

La compensation de phase du déplacement sur la durée totale de l'intégration cohérente spatiale y est réalisée en trois étapes principales ;

    i. la première étape réalise la dite compensation continue relative de la variation de phase (603) due au déplacement du porteur (601), dite compensation continue du déplacement du porteur, sur la durée de ladite intégration cohérente spatiale élémentaire (602) $\Delta T_c$ ($\Delta T_c$<20ms).

    ii. la seconde étape corrige la phase de donnée selon l'une des deux approches décrites en [Fig.9] ou [Fig. 10]

    iii. la troisième étape (604) corrige ponctuellement les sorties de filtrage adapté élémentaire du déplacement de phase du porteur, et réalise une sommation supplémentaire (605) , sur une durée pouvant dépasser la durée de ladite intégration cohérente spatiale élémentaire.

Une pondération de fenêtrage supplémentaire est appliquée sur toute la durée de ladite intégration cohérente spatiale pour diminuer le niveau des secondaires de directivité spatiale

- L'étape (601), sous les mêmes conditions que (401), représente la variation de phase de porteuse du signal reçu en fonction du temps, liée au seul déplacement du porteur relativement à la direction d'arrivée du signal, mais en présence de données codées en phase($0/\pi$) qui limitent la durée de cohérence de la phase du signal. La continuité de la variation de phase du signal reçu avec le déplacement du porteur est potentiellement rompue à chaque transition de donnée.
- L'étape (602) représente les différents segments élémentaires d'antenne de ladite antenne à synthèse d'ouverture, synchrones des transitions de phase des données, qui composent l'élongation totale de l'antenne synthèse d'ouverture.
- L'étape (603) représente l'opération de correction de phase de déplacement, appliquée successivement sur chacun de ces segments, impliquant en cela que la phase du déplacement le long de chaque segment est compensée par rapport à la phase du signal reçu au début de chaque segment.

La phase résiduelle, qui correspond à la phase initiale de chacun des segments par rapport à la date de début d'intégration cohérente spatiale, est ensuite compensée, selon l'opération dite de correction ponctuelle de phase, lors de la sommation des différents segments composant ladite antenne à synthèse d'ouverture.

Selon le principe de la synthèse d'ouverture, la compensation de phase de déplacement $\delta_{(p,q)}$ ($t$) doit être menée en temps réel pour s'adapter aux variations de vitesse du porteur, ce qui nécessite de connaitre l'état de phase de la donnée avant l'application de la correction de phase.

Après l'application du traitement à synthèse d'ouverture sur chacun des segments élémentaires d'antenne, les signaux délivrés sont équivalents à ceux d'une antenne réseau qui réalise un échantillonnage spatial de la phase du signal reçu le long de l'axe de déplacement du porteur. Ces éléments d'antennes, dits segments d'antenne virtuels, peuvent alors être combinés en phase comme toute antenne composée de capteurs élémentaires ponctuels, par exemple pour orienter une voie d'un traitement de formation de voie dans une direction donnée, ou bien pour réaliser un traitement de rejection de brouilleur de type CRPA.

Au titre de l'invention, la compensation du déplacement permet d'orienter la voie de directivité dans la seule direction attendue du signal réfléchi (celle de la position de la cellule de réflexion virtuelle considérée).

Il n'y a pas équivalence stricte entre le comportement d'une antenne à synthèse d'ouverture réalisant la compensation en continu du déplacement sur toute la longueur de l'antenne, et celui d'une synthèse d'ouverture décomposées en segments de sous-antennes recomposés. En effet, le critère d'échantillonnage spatial peut ne plus être respecté si la distance entre les sous-antennes est supérieure à une demi-longueur d'onde, entrainant alors l'apparition de lobes images sur la figure de directivité de l'antenne synthétisée, ce qui impliquerait de limiter la vitesse de déplacement du porteur (à durée donnée de parcours du segment élémentaire d'antenne), ou encore de limiter la durée d'intégration cohérente du segment élémentaire (à vitesse du porteur donnée).

La mise en oeuvre selon l'invention passe outre à ce défaut, dans ses premières réalisations, puisque la coïncidence des retards de phases de codes des différents signaux réfléchis ne sera réalisée que dans une seule direction visée par l'antenne compatible de la direction du point de réflexion réel, les autres directions de réceptions liées à des ambiguïtés spatiales n'étant pas compatibles simultanément avec les phases de code attendues.

D'autre part, la présence d'ambiguïtés de la fonction de directivité ne réduit en rien le gain en rapport signal à bruit apporté par le filtrage spatial fourni par l'antenne et la séparation spatiale des cellules de réflexion virtuelles est renforcée en dehors des zones d'ambigüité.

Seule la capacité de rejection omnidirectionnelle des interférences est réduite dans les directions des ambigüités spatiales.

- L'étape (604) représente ladite opération de correction ponctuelle de phase résiduelle appliquée avant la sommation des sorties élémentaires des éléments d'antenne à synthèse d'ouverture.
- L'étape (605) représente la longueur totale apparente de l'antenne synthétique créée par la compensation des phases de déplacement, située perpendiculairement à la direction du signal, intégrant ainsi continûment le signal reçu dans son plan d'onde.

Le signal généré par l'antenne à ouverture de synthèse de longueur totale apparente ($L_a$) résulte du filtrage spatial par l'antenne ainsi créée, permettant de rejeter les signaux selon la directivité de ce segment linéaire d'antenne, autour de la direction du signal reçu, et apporte un gain en rapport signal à bruit sur la réception du signal de (

$$10\log\left(\frac{2L_a}{\lambda}\right))$$

Le traitement permet de rejeter des sources d'interférences et trajets multiples qui n'arrivent pas dans la même direction que le signal (en dehors du lobe d'ouverture principal et des éventuelles zones d'ambigüités de la fonction de directivité) et d'en améliorer la détection et la poursuite.

[Fig.7] décrit un chronogramme selon l'invention, similaire au chronogramme en [Fig.5], illustrant les différentes modulations appliquées sur le signal reçu dans le cas d'une période de modulation des données connues a priori, plus courte que la durée totale de ladite intégration cohérente spatiale. Il présente une alternative aux limitations d'intégration cohérente présentées lorsqu'on ne dispose pas de voie pilote.

La figure présente un chronogramme similaire au chronogramme de la [Fig.5], illustrant les différentes modulations appliquées sur le signal reçu dans le cas d'une période de modulation des données connues a priori, plus courte que la durée totale de ladite intégration cohérente spatiale

- L'étape (701) représente, identiquement à (501), l'évolution continue de la phase du signal reçu $\delta\varphi_{(p,q)}(t)$ par rapport à une phase d'origine prise au temps $t_k$-2, uniquement liée au déplacement du porteur et avant compensation de la phase

$$\delta\varphi_{(p,q)}(t) = 2\pi.f_0.(t - t_{k-1}).\vec{d_q}.\frac{\vec{V_p}}{C}$$

- L'étape (702) représente, similairement à (502), ladite pondération de fenêtrage en amplitude, mais, différemment de (502), cette pondération symétrique est appliquée sur la durée totale de ladite intégration cohérente spatiale contenant un nombre entier de périodes de code correspondant auxdits segments d'intégration cohérente spatiale élémentaire
- L'étape (703) représente, similairement à (503), la compensation de phase relative -

$$\delta\varphi_{(p,q)}(t) = \left( -2\pi.f_0.(t - t_{k-1}).\vec{d_q}.\frac{\vec{V_p}}{C} \right)$$ appliquée sur le signal reçu pendant la durée $\Delta T_c$ d'intégration cohérente spatiale élémentaire, mais, différemment de (502), cette pondération ne s'applique pas sur toute la durée d'intégration cohérente spatiale, mais seulement sur des périodes synchrones aux bit de données, correspondant auxdites intégrations cohérentes élémentaires
- L'étape (704) représente un exemple de rupture de la continuité de la phase des données pendant la drée d'intégration cohérente spatiale
- L'étape (705) représente la phase relative de compensation signée du déplacement une fois corrigée par la phase des données
- L'étape (706) représentent la phase résiduelle du signal après correction par la phase relative du déplacement signée
- L'étape (707) représentent l'application de ladite correction ponctuelle de phase résiduelle,

[Fig.8] présente selon l'invention, le principe de correction de la phase de données dit correction d'état de phase de données avec latence (appliquée à titre d'exemple, dans le cas d'une modulation de phase B-PSK, mais généralisable aux N états de phase d'une modulation N-PSK), suivant lequel le signal reçu est globalement retardé sur une durée au moins égale de la durée d'un bit de donnée, plus un laps de temps faible permettant au récepteur GNSS de détecter, en parallèle et en anticipation au traitement retardé, l'état de phase de la donnée.

La latence typique à appliquer sur le signal traité par l'antenne synthétique sera de 20ms pour un signal GPS C/A auquel il convient d'ajouter 1ms pour tenir compte la latence du traitement de détection du signe.

- L'étape (801) est le traitement classique de détection du signe de donnée brute réalisant sur l'échelle de temps courant (t) la détection de la phase après la fin de la transmission du bit de donnée (t+1). En cas d'erreur, le traitement de remise en cohérence spatial devient inopérant et peut-être facilement surveillé à partir de l'évolution du rapport signal à bruit de sortie du signal réfléchi suivi par la voie de directivité. Le taux d'occurrence d'une erreur de démodulation de phase de donnée est jugé suffisamment faible pour autoriser une disponibilité suffisante du traitement de synthèse d'ouverture.
- L'étape (802) est une ligne à retard numérique correspondant à la latence de détection de l'état de phase des données, appliquée au signal d'entrée du traitement radar passif multistatique GNSS afin de retarder le temps local sur le temps (t+1)+ε, où ε est un majorant additionnel du temps de propagation des signaux et du temps latence de détection du signe de phase des données (par exemple 100 ms). La latence de 100ms ainsi introduite par la ligne à retard est considérée comme affectant peu le temps de préavis d'alerte de détection d'un obstacle pour les porteurs se déplaçant à des vitesses inférieures à 100m/s.
- L'étape (803) réalise la synchronisation du retard du traitement de synthèse d'ouverture sur les époques précises $(t+1)_i$ de transition de bit de données, spécifique à chacun des signaux reçus (i).
- L'étape (804) permet de corriger ladite compensation continue de la phase du déplacement du porteur, par la valeur de l'état de modulation de phase de la donnée , , obtenue en temps différé à (t+1) par le traitement de détection de l'état de phase des données (801). La compensation corrigée ainsi obtenue est dite, compensation signée du déplacement.

L'étape (808) réalise, conformément au principe de filtrage adapté, limité au retard et le doppler, des trajets réfléchis décrit par [D2] (« Méthode et dispositif de détection passive d'une cible à partir de signaux de radionavigation par satellite »), le filtrage adapté selon le retard et le doppler attendu du trajet réfléchi correspondant à la cellule de réflexion

On calcule pour cela, pour chaque satellite et chaque cellule, la fonction d'intercorrélation entre le signal reçu $S_i$, obtenu après compensation continue de la phase du déplacement du porteur, et le code local L décalé, par rapport au code local asservi sur le direct, d'une valeur de retard $\widehat{\delta_\tau}(s_i, c_k)$ correspondant à la différence de marche prédite entre le trajet direct et le trajet indirect du signal diffracté sur la cellule $c_k$, selon la relation suivante :

$$\Gamma_{d+r}\left(\widehat{\delta_\tau}(s_i, c_k), t\right) = E\left\{\left(D_i(t) + R_{i,k}(t)\right) L_i^*\left(t - \widehat{\delta_\tau}(s_i, c_k)\right)\right\}$$

$D_i(t) + R_{i,k}(t)$ désigne le signal reçu composé d'un trajet direct $D_i(t)$ et d'un trajet indirect $R_{i,k}(t)$.

$L_i(t)$ désigne le code d'étalement local associé au satellite si.

$L_i^*(t)$ désigne le complexe conjugué de L(t). $\widehat{\delta_\tau}(s_i, c_k)$ est le retard estimé entre la réception du trajet direct et du trajet indirect du signal, diffracté sur la cellule $c_k$

$E\{\}$ désigne la fonction de corrélation entre deux signaux temporels.

- L'étape (805) réalise au temps courant retardé la compensation de phase relative de déplacement signée (705) et ladite intégration cohérente spatiale élémentaire
- L'étape (806) réalise ladite correction ponctuelle de phase résiduelle (707) qui permet de compenser la phase relative du signal existant au début de chaque segment d'intégration cohérente spatiale élémentaire. Cette phase relative est calculée par cumul des variations de phases observées pour lesdites phases de recalage continue précédentes.
- L'étape (807) réalise ladite intégration cohérente spatiale par sommation des sorties de filtrage adapté correspondant aux segments élémentaires d'antenne sur la durée d'intégration cohérent, corrigés de la phase résiduelle.

[Fig.9] présente selon un mode de réalisation de l'invention, le principe de correction de la phase de données, dit correction de l'état de phase de donnée sans latence, suivant lequel les deux hypothèses (appliquée à titre d'exemple, dans le cas d'une modulation de phase B-PSK, mais généralisable aux N états de phase d'une modulation N-PSK) de la donnée courante sont retenues pour calculer en parallèle et au temps courant (t) sur chaque tronçon élémentaire d'antenne sur chaque période de données, lesdites compensations continues relatives de la variation de phase de porteuse selon les deux hypothèses, puis de retenir, à la fin de chaque période (t+1) , l'état de compensation de phase correspondant à la valeur du signe de phase de la donnée effectivement détectée par un traitement classique de détection du signe de phase de donnée brute.

L'avantage de cette méthode est de pouvoir entretenir en temps réel la compensation de phase du déplacement sans introduire de latence sur la voie de traitement radar passif multistatique GNSS, permettant ainsi de ne pas impacter le préavis d'alerte de détection d'un obstacle pour les porteurs se déplaçant à des vitesses supérieures à 100m/s.

Cette méthode selon l'invention de traitement en parallèle des différentes hypothèses de phase de données ne se réduit pas au cas binaire tel que présenté ici, pour un mode de réalisation compatible de la modulation B-PSK des signaux GNSS actuels, mais est généralisable de façon similaire à tout mode de réalisation mettant en oeuvre une modulation de données en phase de type N-PSK.

- L'étape (901) est le traitement classique de détection du signe de phase de donnée brute, identique à (801), réalisant sur l'échelle de temps courant (t) la détection de la phase après la fin de la transmission du bit de donnée (t+1)
- L'étape (902) réalise la synchronisation au plus près du temps courant du traitement de synthèse d'ouverture sur les époques précises (t)$_i$ de transition de bit de données, spécifique à chacun des signaux reçus (i).
- L'étape (903) réalise au temps courant la compensation de phase relative de déplacement (705) selon la première alternative de valeur du signe de phase, suivie de ladite intégration cohérente spatiale élémentaire (905)
- L'étape (904) réalise au temps courant et en parallèle de la précédente (903) la compensation de phase relative de déplacement (705) selon la seconde alternative de valeur du signe de phase, suivie de ladite intégration cohérente spatiale élémentaire (906)
- L'étape (910) réalise le filtrage adapté selon le retard et le doppler attendus du trajet réfléchi correspondant à la cellule de réflexion, sous l'hypothèse de l'état de phase de donnée 1
- L'étape (911) réalise le filtrage adapté selon le retard et le doppler attendus du trajet réfléchi correspondant à la cellule de réflexion sous l'hypothèse de l'état de phase de donnée 2 (généralisable à N états de donnée dans le cas d'une modulation de données BPSK)
- L'étape (907) réalise la sélection a posteriori à (t+1) du résultat d'intégration cohérente du signal compensé, selon l'état de phase de la donnée détecté par le traitement de détection de signe de phase (901)
- L'étape (908) réalise ladite correction ponctuelle de phase résiduelle (707) de façon identique à (806)
- L'étape (909) réalise ladite intégration cohérente spatiale par sommation des sorties de filtrage adapté de façon identique à (807).

[Fig. 10] est un chronogramme illustrant, pour le principe de ladite correction de l'état de phase de donnée sans latence, les différentes modulations appliquées sur le signal reçu dans le cas d'une modulation des données inconnues a priori, de période plus courte que la durée totale de ladite intégration cohérente spatiale

- L'étape (1001) représente, identiquement à (701), l'évolution continue de la phase du signal reçu par rapport à une phase d'origine prise au temps $t_0$, liée au déplacement du porteur et avant compensation de la phase
- L'étape (1002) représente, identiquement à (704), un exemple de rupture de la continuité de la phase des données pendant la drée d'intégration cohérente spatiale
- L'étape (1003) représente, identiquement à (705), un exemple de rupture de la continuité de la phase des données pendant la durée d'intégration cohérente spatiale
- L'étape (1004) représente, à titre d'illustration pour une réalisation avec modulation B-PSK, les réalisations selon les deux hypothèses, s de donnée de la compensation de phase relative $\left( -2\pi . f_{0'} \left( t - t_{k-1} \right) . \vec{d}_q . \dfrac{\vec{V}_p}{C} \right)$ et

$$\left( +2\pi . f_{0'} \left( t - t_{k-1} \right) . \vec{d}_q . \dfrac{\vec{V}_p}{C} \right)$$

, appliquées sur le signal reçu pendant la durée $\Delta T_c$ d'intégration cohérente spatiale élémentaire, sur chacune des périodes synchrones aux bit de données,
- L'étape (1005) représente la phase relative de ladite compensation signée du déplacement une fois corrigée par la phase des données, une fois l'indétermination de l'état de phase levée par le traitement de détection de l'état de phase de donnée

- L'étape (1006) représentent la phase relative de compensation après ajout desdites corrections ponctuelles de phase résiduelles, qui permet de maintenir constante la variation de phase liée au déplacement sur la durée d'intégration cohérente spatiale.

[Fig.11] décrit une approche selon l'invention pour régler les paramètres de traitement temps réel en fonction de la vitesse du porteur et du secteur à couvrir par la mire radar, tel que le nombre de cellules de réflexion virtuelles du quadrillage, les durées d'intégration élémentaires et d'antenne en fonction de la vitesse de déplacement du porteur, de la largeur angulaire de la voie de directivité attendue et de la résolution temporelle des codes d'étalement.

L'objet de ce réglage est de permettre de configurer la taille et le nombre des cellules en fonction du secteur et de la plage de distance à couvrir, en tenant compte des contraintes liées à la synthèse de directivité, qui dépend elle-même de la vitesse du porteur, de la durée d'intégration cohérente spatiale, du gain de détection escompté.

Les règles de dimensionnement suivantes sont appliquées pour réaliser cette configuration :

Règle 1) : l'ouverture à -3 dB du lobe principal de l'antenne synthétique, considérée comme linéaire est données par l'expression :

$$2\theta_3 \approx \frac{55 \times \lambda}{L_A} \times \frac{\pi}{180} \text{ (rd)}$$

avec,

$$L_A = V_P \times T_A = V_P \times k T_E$$

où,

- $L_A$ est la longueur apparente de l'antenne vue de la direction d'incidence du signal, soit encore la longueur projetée de la distance parcourue par l'antenne sur la durée d'intégration cohérente spatiale $T_A$
- $T_E$ est la durée d'intégration cohérente spatiale élémentaire, correspondant à la durée d'une période de donnée
- k est le nombre entier de périodes de d'intégration élémentaire qui compose la durée d'intégration cohérente spatiale
- 2 est la longueur d'onde de la porteuse du signal (-20 cm en bande de réception GNSS L1)

Règle 2) : La taille des cellules de réflexion virtuelles est définie par la résolution des codes d'étalement utilisés par la constellation, aussi bien en distance (R), qu'en angle ( e).

Ainsi, les cases en distance de la grille doivent être séparées par moins d'un demi-chip de code, $\Delta g_R = \frac{CT_c}{2}$, soit typiquement 150m dans le cas d'un C/A GPS.

De même, les cases angulaires doivent être aussi séparées par moins d'un demi-chip de code, $\Delta g_\theta = \frac{CT_c}{2}$, quelle que soit la distance au porteur, ce qui contraint l'ouverture à -3 dB de l'ouverture du lobe de directivité :

$$2\theta_3 < \frac{c \times T_c}{2 R_{max}}$$

où,

- c ; est la vitesse de la lumière
- $R_{max}$ est le rayon maximum à couvrir par la grille de cellules virtuelles

Règle 3) : La contrainte d'échantillonnage spatiale des segments d'antennes élémentaires, respectant Nyquist s'exprime sous la forme ;

$$V_p \times T_E < \frac{\lambda}{2}$$

Règle 4) : La conjonction des inégalités précédentes conduit aussi à une contrainte supplémentaire sur le nombre minimum de périodes d'intégration cohérentes élémentaires nécessaires pour composer l'intégration cohérente spatiale :

$$k > \frac{4R_{max}}{c \times T_c}$$

- L'étape (1101) calcule le nombre de cellules de réflexion virtuelles nécessaires dans le domaine angle-distance choisi. Le nombre de cellules de réflexion virtuelles dépend de la résolution angulaire de l'antenne, définie par l'ouverture à -3dB du lobe principal de directivité ($2\Theta_3$) choisie.

$$N_c = N_R \times N_A$$

où,

$$N_R = \frac{(R_{max} - R_{min})}{\left(\frac{c \times T_c}{2}\right)}$$

où,
$R_{min}$ est le rayon minimum à couvrir par la grille de cellules virtuelles
et,

$$N_A = \frac{\Omega}{2\theta_3}$$

Ce qui conduit, en remplaçant les termes $N_A$ et $N_R$ par leur expressions majorantes à :

$$N_c \leq \frac{\Omega \times k^2}{\pi}$$

- L'étape (1102) calcule le retard relatif direct-indirect, le doppler satellite, et la direction en gisement (relativement au déplacement du porteur) de chacun des signaux réfléchis vers le porteur depuis chacun des centres des cellules du quadrillage, à partir de la connaissance de la position des sources d'émissions (satellites) au temps courant, et de la position et du vecteur vitesse du porteur supposés fournis par ailleurs.
- L'étape (1103) calcule la durée de ladite intégration cohérente spatiale correspondant à l'ouverture angulaire à synthétiser.

$$T_A = kT_E$$

soit en remplaçant k par son minorant :

$$T_A \geq \frac{4R_{max} \times T_E}{c \times T_c}$$

Typiquement, pour une portée maximale de détection à $R_{max}$=600m, dans le cas du signal C/A GPS, la durée d'intégration cohérente spatiale doit être supérieure à ~8ms, donc compatible d'un flux de données inférieur à 125bit/s (compatible du message I-Nav de Galileo et du message GPS C/A), lorsqu'une voie de données du signal GNSS est utilisée.

- L'étape (1104) détermine la durée d'intégration cohérente maximum du segment élémentaire d'antenne, ladite intégration cohérente spatiale élémentaire, de la composante du signal utilisée.

Dans le cas d'un code long périodique, la durée d'intégration cohérente spatiale élémentaire ($T_E$) n'est pas bornée par le changement de phase des données, et le segment d'antenne peut éventuellement couvrir toute la durée d'intégration cohérente spatiale ($T_A$). Il peut aussi ne pas être un sous-multiple entier de $T_A$, puisqu'il n'est pas nécessaire que l'intégration cohérente spatiale soit synchronisée avec la période du code local.
Dans le cas d'un code court périodique, la durée d'intégration cohérente spatiale élémentaire est définie par la période des données qui modulent la porteuse et le code d'étalement de cette composante (typiquement égale à 20ms dans le cas du GPS C/A). Ladite intégration cohérente spatiale élémentaire est réalisée de manière synchrone avec la transition de phase des bits de message, et la durée de ladite intégration cohérente spatiale est recadrée en valeur inférieure sur un multiple entier de la durée de ladite intégration cohérente spatiale élémentaire.

- L'étape (1105) réalise une pondération en amplitude synchronisée sur la période d'intégration cohérente spatiale ($T_A$), correspondant au traitement (502) dans le cas d'une voie pilote sans donnée, ou (702) dans le cas d'une voie de données ou d'un signal avec données.

La pondération d'amplitude est une fonction symétrique, centrée sur TA/2 de durée T A.
Dans le cas d'un code long (par exemple le code d'un voie pilote Galileo de 100ms), cette fonction de pondération est appliquée au fil de l'eau, en multipliant le code local échantillonné par cette fonction au rythme de sa génération et avant corrélation avec le signal reçu.
Dans le cas d'un code court périodique, la fonction de pondération peut être appliquée à chaque réalisation de la corrélation entre le signal reçu et le code local court, soit toute les 1ms dans le cas d'un signal GPS C/A.

- L'étape (1106) réalise la compensation du déplacement suivant deux approches, signée ou non, selon que le signal comporte des données ou non.

Dans le cas de signaux avec données, la compensation est réalisée par segments élémentaires au rythme la corrélation entre le signal reçu et le code local court, soit toute les 1ms dans le cas d'un signal GPS C/A, et en corrigeant l'état de phase de la donnée selon les principes décrits en [Fig.8] dans une réalisation (1110) où la correction d'état des données est appliquée avec latence, et [Fig.9] dans une réalisation où la correction d'état est appliquée en temps réel. Dans le premier cas, la latence correspond à la durée minimale d'acquisition de la donnée suivie de son décodage, puis de la transmission au traitement de radar passif. Dans le second cas, le nombre d'hypothèses à traiter en parallèle dépend du nombre d'états de phase codant les données dans le cas de modulation N-PSK, habituellement limités à 2 états (B-PSK) dans le cas des systèmes GNSS actuels. Il faut aussi prendre en compte une latence réduite de la transmission de l'état de phase au traitement de radar GNSS.
Dans le cas de signaux sans donnée, la compensation est réalisée, au fil de l'eau, en multipliant au fil de l'eau le signal reçu échantillonné par la fonction de compensation fonction au rythme de sa réception temps réel et avant corrélation avec le code local.

- L'étape (1110) réalise le filtrage adapté en retard/doppler par segment d'intégration cohérente élémentaire, conformément au principe de filtrage adapté, limité au retard et le doppler, des trajets réfléchis décrit par [D2] (« Méthode et dispositif de détection passive d'une cible à partir de signaux de radionavigation par satellite »), selon le retard et le doppler attendus du trajet réfléchi correspondant à la cellule de réflexion

On calcule pour cela, pour chaque satellite et chaque cellule, la fonction d'intercorrélation entre le signal reçu $S_i$, obtenu après compensation continue de la phase du déplacement du porteur, et le code local L décalé, par rapport au code local asservi sur le direct, d'une valeur de retard $\widehat{\delta_\tau}(s_i, c_k)$ correspondant à la différence de marche prédite entre le trajet direct et le trajet indirect du signal diffracté sur la cellule $c_k$, selon la relation suivante :

$$\Gamma_{d+r}\left(\widehat{\delta_\tau}(s_i, c_k), t\right) = E\left\{\left(D_i(t) + R_{i,k}(t)\right)L_i^*\left(t - \widehat{\delta_\tau}(s_i, c_k)\right)\right\}$$

$D_i(t) + R_{i,k}(t)$ désigne le signal reçu composé d'un trajet direct $D_i(t)$ et d'un trajet indirect $R_{i,k}(t)$.

$L_i(t)$ désigne le code d'étalement local associé au satellite si.

$L_i^*(t)$ désigne le complexe conjugué de L(t). $\widehat{\delta_\tau}(s_i, c_k)$ est le retard estimé entre la réception du trajet direct et du trajet indirect du signal, diffracté sur la cellule $c_k$

$E\{\}$ désigne la fonction de corrélation entre deux signaux temporels.

- L'étape (1107) réalise l'intégration cohérente de filtrage adapté par segment élémentaire, conformément au traitement (805) ou (905) et (906)
- L'étape (1108) réalise, cadencée par la transition des segments élémentaires, ladite correction ponctuelle de phase résiduelle, correspondant à la phase du signal de corrélation au début de chaque segment d'intégration cohérente spatiale élémentaire délivré par un dispositif de mesure du déplacement extérieur au présent système de radar GNSS, et calculé en relatif par rapport à la phase du début d'intégration cohérente spatiale, elle-même corrigé de l'état de phase de la donnée délivrée par (1110)
- L'étape (1109) réalise la sommation sur la durée d'intégration cohérente spatiale $T_A$ de l'ensemble des résultats de filtrage adaptés élémentaires (1107) et des corrections ponctuelles de phase résiduelle (1108)

**Exemple de réalisation particulière**

[Fig.12] décrit l'architecture principale du dispositif de traitement de radar passif multistatique GNSS en angle-retard et doppler dans lequel ledit dispositif est configuré pour mettre en oeuvre le procédé de filtrage adapté en angle-retard et doppler selon les méthodes de l'invention.

Elle présente un mode de réalisation particulier, mais pas limitatif, mettant en oeuvre un traitement d'antenne à synthèse d'ouverture pour réaliser le filtrage adapté en angle-retard et doppler du radar passif multistatique GNSS, et indique une organisation préférentielle du traitement à synthèse d'ouverture dans l'architecture d'ensemble.

Bien que l'invention s'applique avantageusement pour un système de radionavigation par satellites, elle s'applique plus largement pour tout système pour lequel un récepteur de signaux reçoit plusieurs signaux émis par des sources distinctes dont les positions sont connues. Par exemple, l'invention s'applique également à des systèmes de télécommunications, par exemple des systèmes 4G ou 5G pour lesquels les sources sont des antennes relais.

- La première étape (1201) consiste à recevoir un signal de radionavigation au travers d'une seule antenne omnidirectionnelle située de préférence à l'avant du porteur
- L'étape suivante (1202) consiste à calculer (via PVT classique) un point GNSS à partir du signal d'entrée afin de déterminer la position et le temps courant GNSS au niveau du porteur. Le PVT est obtenu soit à partir du signal d'antenne élémentaire (1201), soit après formation d'une voie par synthèse d'ouverture dans la direction du satellite telle que décrit en (1206)
- Les étapes suivantes (1203) à (1213) de la méthode sont déterminées pour chaque cellule $c_k$ de l'espace de recherche et pour chaque satellite $S_i$ en visibilité du récepteur.

L'espace de recherche d'un obstacle est décomposé en une pluralité de cellules définies en relatif de la position et de la direction de déplacement du porteur selon une grille gisement-distance La taille des cellules est choisie pour être compatible de la résolution de la fonction de corrélation spatiale du code d'étalement utilisé et de la vitesse du porteur selon le principe de réglage présenté [Fig.11]. Chaque cellule est définie par les coordonnées de son centre.

A l'étape (1203), ayant calculé la position et le temps reçu (1202), on détermine la position du satellite $P_{Si}(t)$ à l'instant courant ainsi que la distance $r_{Di}(t)$ parcourue par le trajet direct du signal GNSS entre chaque satellite Si et l'antenne de position $P_a$. Ce calcul est réalisé, par exemple, à partir d'éphémérides de chaque satellite.

- A l'étape (1204) on détermine la position du centre de chaque cellule virtuelle $c_k$ représentant les cases d'exploration des positions possibles de réflexions du signal satellite en angle et distance, au temps courant. La position des centres des cellules est d'abord calculée en relatif par rapport au porteur, puis transformée en position absolue grâce au calcul de la position et de la vitesse du porteur, obtenue via un récepteur GNSS ou tout autre système.

- A l'étape (1205), pour chaque cellule $c_k$ de l'espace de recherche et chaque satellite $S_i$, on détermine la distance $r_{Ri,k}(t)$ parcourue par le trajet indirect du signal GNSS entre le satellite $S_i,(t)$ et l'antenne du récepteur de position $P_a(t)$, passant par la cellule c k.

De façon similaire, pour chaque cellule $c_k$ de l'espace de recherche et chaque satellite $S_i$, on détermine le doppler relatif du signal réfléchi en tenant compte de la vitesse et de la direction de déplacement du porteur, ainsi que de l'angle d'incidence du signal réfléchi depuis le centre de la cellule.

$$\widehat{\delta_{dop}}(R_i, c_k) = f_0 \times \frac{V_{S_i}(c_k) - V_P(c_k)}{c}$$

où,

- $\widehat{\delta_{dop}}(R_i, c_k)$ est le doppler relatif du signal indirect réfléchi sur la cellule $c_k$, vue du porteur
- $V_{Si}(c_k)$ est la vitesse apparente du satellite vue de la cellule $c_k$, en supposant dans une première réalisation que les objets sources de réflexion sur chacune des cellules sont fixes.

$$V_{S_i}(c_k) = V_{S_i} \times \left(\overrightarrow{d_{S_i}}.\overrightarrow{d_{c_k}(S_i)}\right)$$

où,

- $V_{Si}$ est la vitesse du satellite i
- $\overrightarrow{d_{Si}}$ est la direction unitaire du vecteur vitesse du satellite
- $\overrightarrow{d_{ck}(S_i)}$ est le vecteur direction unitaire du satellite, vue de la cellule $c_k$
- $V_P(c_k)$ est la vitesse apparente du porteur vue de la cellule $c_k$

avec,

$$V_P(c_k) = V_p \times \left(\overrightarrow{d_P}.\overrightarrow{d_{c_k}}\right)$$

où,

- $V_p$ est la vitesse du porteur
- $\overrightarrow{d_P}$ est la direction unitaire du vecteur vitesse du porteur
- $\overrightarrow{d_{ck}}$ est le vecteur direction unitaire de la cellule $c_k$, vue du porteur

et,

$$V_{S_i}(c_k) = V_p \times \left(\overrightarrow{d_P}.\overrightarrow{d_{c_k}}\right)$$

- A l'étape (1206), on détermine le retard entre la réception du trajet direct et du trajet indirect du signal, à l'aide de la relation suivante :

$$\widehat{\delta_\tau}(s_i, c_k) = \frac{r_{R_{ik}}(t) - r_{D_i}(t)}{c}$$

- A l'étape (1207), on mène les traitements de formation de voie à synthèse d'ouverture tels que décrit par les figures 3 à 11, dans les directions de chacune des cellules $c_k$ susceptibles les signaux potentiellement réfléchis. Chacune des directions de voies peut correspondre à plusieurs cellules séparées en distance.

Ce traitement complète le traitement radar GNSS décrit par [D2], limité aux retard et doppler, en apportant un gain supplémentaire en rapport signal à bruit en direction du signal diffracté en cellule $c_k$, ainsi qu'une isolation complémentaire entre le signal direct et le signal réfléchi, liée à la directivité spatiale de l'antenne, permettant de détecter des signaux réfléchis de plus faible niveau

- A l'étape (1208), on mène les traitements de formation de voie à synthèse d'ouverture tels que décrit par les figures 3 à 11, en direction des signaux directs des satellites $S_i$. Ce traitement de formation de voie à synthèse d'ouverture constitue une option au traitement de base réalisé sans formation de voies en direction des signaux directs. La valeur ajoutée de cette option est l'apport d'un gain supplémentaire sur les signaux satellites reçus, ainsi qu'une isolation du trajet direct des trajets réfléchis permettant de renforcer la précision et la disponibilité du PVT porteur, dont les mesures de temps reçu peuvent être dégradées en présence de trajets multiples
- A l'étape (1209), sont générés les codes PRN synchronisés sur la phase de code prédite correspondant aux trajets indirects des signaux réfléchis sur chacune des cellules $c_k$, pour le doppler prédit associé au satellite et à la cellule.
- A l'étape (1210), on calcule, pour chaque satellite et chaque cellule, la fonction d'intercorrélation entre le signal reçu et le code local retardé du retard calculé à l'étape (1209) :

$$\Gamma_{d+r}\left(\widehat{\delta_\tau}(s_i, c_k), t\right) = E\left\{\left(D_i(t)+R_{i,k}(t)\right)L_i^*\left(t-\widehat{\delta_\tau}(s_i, c_k)\right)\right\}$$

$D_i(t)+R_{i,k}(t)$ désigne le signal reçu composé d'un trajet direct $D_i(t)$ et d'un trajet indirect $R_{i,k}(t)$.
$L_i(t)$ désigne le code d'étalement local associé au satellite si.

$L_i^*(t)$ désigne le complexe conjugué de L(t). $\widehat{\delta_\tau}(s_i, c_k)$ est le retard estimé entre la réception du trajet direct et du trajet indirect du signal, diffracté sur la cellule $c_k$
$E\{\}$ désigne la fonction de corrélation entre deux signaux temporels.

- A l'étape (1212), pour chaque satellite et chaque cellule, on calcule la fonction d'autocorrélation théorique du code local pour le retard déterminé à l'étape (1206) :

$$\widehat{\Gamma}_d\left(\widehat{\delta_\tau}(s_i, c_k), t\right) = E\left\{L(t)L^*\left(t-\widehat{\delta_\tau}(s_i, c_k)\right)\right\}$$

- A l'étape (1211), on calcule la différence entre les résultats obtenus aux étapes (1210) et (1212) :

$$\widehat{\Gamma}_r\left(\widehat{\delta_\tau}(s_i, c_k), t\right) = \Gamma_{d+r}\left(\widehat{\delta_\tau}(s_i, c_k), t\right) - \widehat{\Gamma}_d\left(\widehat{\delta_\tau}(s_i, c_k), t\right)$$

Cette différence correspond à une fonction d'intercorrélation corrigée de la fonction d'autocorrélation du trajet direct du signal. Autrement dit, elle correspond à la fonction d'intercorrélation limitée aux seuls trajets secondaires du signal et représentée par les pics secondaires $\Gamma_{R1}(\delta_1)$, $\Gamma_{R2}(\delta_2)$, $\Gamma_{R3}(\delta_3)$ sur la [Fig.3].
Cette soustraction de la contribution résiduelle du signal direct combinée avec le traitement à synthèse d'ouverture permet de réduire encore plus le seuil de détection des signaux réfléchis, en supplément de l'atténuation signal direct introduite par la voie à synthèse d'ouverture, typiquement au-delà -30 à -40dB selon les types de pondération spatiale d'antenne.
Pour chaque cellule, on intègre la fonction d'intercorrélation du signal d'écho calculée à l'étape (1210), sur une durée $T_c$ compatible de la durée d'intégration cohérente des mesures GNSS (typiquement de l'ordre de 20ms à 100ms) :

$$\widehat{\Gamma}_r\left(\widehat{\delta}_\tau(s_i, c_k), t_p\right) = \int_{t_p}^{t_p+Tc} \widehat{\Gamma}_r(c_k, u).\, du$$

- A l'étape (1213), les fonctions d'intercorrélation corrigées sont accumulées sur l'ensemble des satellites, pour chaque cellule :

$$\widehat{\Gamma}_r(c_k, t_p) = \sum_{i=1}^{Ns}\widehat{\Gamma}_r\left(\widehat{\delta}_\tau(s_i, c_k), tp\right)$$

Dans une variante de réalisation, pour chaque cellule, on intègre en temps non-cohérent la fonction d'intercorrélation du signal d'écho, sur une durée $T_{nc}$ compatible de la dynamique relative du porteur et de l'obstacle (typiquement de 1s à 10s) :

$$\widehat{\Gamma}_r(c_k, t_q) = \sum_{p=1}^{P}\widehat{\Gamma}_r(c_k, q+p)$$

- A l'étape (1214), on recherche sur l'ensemble des cellules de l'espace de recherche, au moins un extremum local dans le plan gisement-distance, dit plot gisement-distance.

En option complémentaire, on peut initialiser une poursuite automatique de chacun des plots détectés de la façon suivante :

- On détermine par interpolation parabolique les positions précises de chacun des maximas dans le plan gisement-distance
- On associe dans le temps les plots qui restent suffisamment stationnaires et on rejette les autres plots non stationnaires
- On poursuit dans le temps les pistes de détection en gisement-distance qui se maintiennent dans le temps

**Applications industrielles de l'invention**

Navigation des Drones : Le premier domaine d'application est celui des drones, en particulier pour la fonction de détection et d'évitement. Les plateformes des drones de petite taille ne peuvent pas être équipées des technologies d'évitement existantes (DAA), en raison de leur coût, de leur complexité et de leur poids. Pourtant, tous sont nativement équipés d'un récepteur GNSS.

Assistance à la navigation des véhicules autonomes : Dans le contexte de la voiture autonome, la capacité de détecter les obstacles devant (ou à proximité) de la voiture est une fonction clé. Diverses technologies existent déjà pour apporter des solutions (radar, Lidar, caméra...) mais compte tenu de la criticité en regard des enjeux de sécurité toute solution supplémentaire à bas cout est bienvenue, surtout lorsqu'elle n'implique pas l'intégration de nouveaux capteurs.

Sécurité des trains : La tendance à d'avantage d'autonomie vaut aussi pour les applications ferroviaires. Le GNSS est au centre de nombreuses activités de R&D visant à intégrer le capteur GNSS dans le contexte ERTMS existant. Dans ce contexte, une solution de radar passive basée sur GNSS peut être mise en oeuvre pour la détection de véhicules abandonnés sur les rails, mais aussi pour des applications spécifiques au rail telles que la surveillance de l'environnement ferroviaire tels des glissements de terrain.

Aide à la navigation maritime : L'automatisation progresse également dans le domaine maritime. Le GNSS est utilisé dans le secteur maritime depuis des années, mais de nouvelles applications, notamment pour la navigation autonome, émergent plus récemment. Une solution de radar passif GNSS est une opportunité pour le contrôle de la navigation et la détection d'obstacles en particulier dans les chenaux ou dans les ports.

**Liste des documents cités**

[D1] Glennon E.P et Al: « Feasibility of Air Target Détection using GPS as a Bistatic Radar"; Journal of Global Positioning Systems, vol.5, n° 1&2 December 2006 (2006-12-31), page 119-126 XP055811214, AU ISSN:

1446-3156, DOI: 10.5081/jgps.5.1.119

[D2], FR3114409 Revol M., Fourny N. : « Méthode et dispositif de détection passive d'une cible à partir de signaux de radionavigation par satellite », date de dépôt 21.09.20, mise à disposition du public de la demande 25.03.22, bulletin 22/12)

[D3], FR 160 14 49 Revol M. : « Procédé de localisation ponctuelle d'un véhicule évoluant sur une trajectoire contrainte et système associé », numéro de dépôt : 17194964.7, date de dépôt : 05.10.2017

[D4] FR 1501416 Revol M. ; « Procédé de localisation d'une source de brouillage de signaux d'un système de navigation par satellites et système associé », date de dépôt : 03.07.15, date de mise à la disposition du public de la demande : 06.10.17 Bulletin 17/01

[D5] EP2410352, Revol M. : « Dispositif d'antenne à ouverture synthétique de réception de signaux d'un système comprenant une porteuse et des moyens de détermination de sa trajectoire » - Numéro de dépôt : 11171967.0 - Date de dépôt : 29.06.2011 - Numéro de publication : 20120050103 (16.05.2014 - Demande réputée retirée publié le 18.06.2014 [2014/25])

**Revendications**

1. Procédé de détection et de localisation passif d'obstacles (104) appliqué en réception des trajets de propagation directs et indirects (200) de signaux à étalement de spectre, cohérents et synchronisés, transmis par des sources d'émission distinctes, le dit procédé réalisant un filtrage adapté global des signaux reçus, portant conjointement sur les angles (108), les retards (110 ) et les dopplers (112) attendus en réception des trajets indirects (208) correspondant aux signaux réfléchis selon un ensemble d'hypothèses de positions d'obstacles (202) qui décomposent l'environnement proche de l'antenne de réception en une pluralité de cellules de réflexion quadrillant l'espace en gisement-distance (1101), procédé dit de détection à l'affût en angle-retard et doppler, ledit procédé de détection (114) consistant : -a) à estimer la puissance reçue cumulée, après filtrage adapté global conjoint, des signaux indirects réfléchis (304) pour chacune des hypothèses de position d'obstacles définies par les cellules de réflexion,-b) à extraire les maxima de puissance dans ledit quadrillage et - c) à les poursuivre dans le temps en gisement et distance.

2. Procédé de détection et de localisation d'obstacles, selon la revendication 1, **caractérisé en ce que** le filtrage adapté sur les angles de réception des signaux réfléchis, dit filtrage adapté spatial, participant au filtrage adapté global des signaux reçus, est mis en oeuvre par formation d'un ensemble de voies de directivité (214) orientées selon les directions des cellules de réflexion (1102), fixes en gisement par rapport à la direction de déplacement du véhicule porteur de l'antenne de réception des signaux, dit le porteur, définissant les directions d'incidence attendues des trajets des signaux indirects réfléchis, pour maximisation de la puissance multi-trajets reçue.

3. Procédé de détection et de localisation d'obstacles selon les revendications 1 et 2, **caractérisé en ce que** la formation d'un ensemble de voies de directivité fixes en gisement est réalisée par intégration cohérente, appliquée après filtrage adapté en temps et fréquence des retard et doppler des signaux direct et indirects reçus, (808) (910) (1110)consistant à appliquer sur la phase du trajet reçu considéré, préalablement à l'intégration cohérente temporelle, une compensation correspondant à la projection du déplacement du porteur (1106) sur la direction fixe en gisement attribuée à chacune des voies de directivité, dite intégration cohérente spatiale (1103) des signaux reçus , la dite intégration cohérente spatiale (1109) réalisant un traitement de filtrage adapté spatial mono antenne complémentaire, dit traitement d'antenne à synthèse d'ouverture.

4. Procédé selon la revendication 3, pour lequel la phase modulée N-PSK de codage des messages des signaux reçus, qui définit les N états de la donnée élémentaire, dont le rythme de modulation détermine la durée de cohérence de phase élémentaire du signal (1104), est corrigée préalablement à la compensation du déplacement du porteur, ladite correction de phase de la donnée étant **caractérisée en ce qu'**elle soit menée selon l'une ou l'autre des principes suivants ;

   i. Correction de la phase de donnée du signal selon le principe dit de correction de l'état de phase de données avec latence [Fig.8], pour laquelle le signal reçu est globalement retardé sur une durée au moins égale de la durée d'un bit de donnée, plus un laps de temps faible permettant de détecter l'état de phase de la donnée

   ii. Correction de la phase de donnée du signal selon le principe dit de correction de l'état de phase de donnée sans latence [Fig.9], pour laquelle les N hypothèses de l'état de phase de la donnée, modulée en N-PSK, sont traitées en temps réel en parallèle, puis le résultat de compensation du déplacement du porteur est sélectionné après coup avec une faible latence, une fois détecté l'état de phase de la donnée, ceci avant intégration.

**5.** Procédé de détection et de localisation d'obstacles selon les revendications 1 à 4, **caractérisé en ce que** ledit traitement d'antenne à synthèse d'ouverture forme à la fois les voies de directivité en gisement orientées pour détecter les signaux des trajets réfléchis sur le ou les obstacles (1207), et des voies de directivités orientées en direction des trajets directs des signaux reçus (1208).

**6.** Procédé de traitement d'antenne à synthèse d'ouverture selon les revendications 3 à 5, suivant ledit principe de correction de l'état de phase de donnée avec latence, **caractérisé en ce que** ladite intégration cohérente spatiale appliquée en temps continu sur le signal reçu, comporte :

i. Une détection (801), préalable au fil du temps réel de l'état de phase de la donnée courante (704) réalisée au rythme de la modulation N-PSK des données pour chacun des signaux reçus

ii. L'application global d'une latence sur le signal en entrée (802) dudit traitement d'antenne à synthèse d'ouverture, égal à la durée d'un bit de donnée du signal plus une latence supplémentaire réduite nécessaire à la détection de l'état de phase de la donnée.

iii. La synchronisation (803), dudit traitement à synthèse d'ouverture sur une époque de transition de phase des données du signal, pour chacun des signaux poursuivis, dit signal d'entrée retardé synchronisé

iv. Une correction de la phase dudit signal d'entrée retardé synchronisé, compensée (705) selon l'état détecté de la phase de la donnée (804), correspondant au déplacement du porteur projeté orthogonalement dans la direction de chaque voie formée (602), et appliquée par segments de longueur maximale définie par la durée de cohérence de phase du signal (605) , dits segments d'intégration cohérente spatiale élémentaires (805)

v. Une compensation de la phase de donnée ponctuelle complémentaire (806) (604) (707), correspondant à la phase du signal de corrélation au début de chaque segment d'intégration cohérente spatiale élémentaire, dite correction ponctuelle de phase résiduelle, appliquée sur les sorties (706) successives des segments d'intégration cohérente spatiale élémentaires pour ledit signal compensé sélectionné, lorsque la durée de ladite intégration cohérente spatiale dépasse la durée de cohérence de phase du signal,

vi. Une pondération de fenêtrage en amplitude (702) correspondant à la durée de ladite intégration cohérente spatiale (807) pour réduire le niveau des secondaires de la fonction de directivité spatiale résultante.

**7.** Procédé de traitement d'antenne à synthèse d'ouverture selon les revendications 3 à 5, suivant ledit principe de correction de l'état de phase de donnée sans latence, **caractérisé en ce que** ladite intégration cohérente spatiale, appliquée en temps continu sur le signal reçu, comporte :

i. La synchronisation (902), dudit traitement à synthèse d'ouverture sur une époque de transition de phase des données du signal, pour chacun des signaux poursuivis, dit signal d'entrée synchronisé

ii. N corrections en parallèle (1004) (903) (904), pour chacun des états de phase N-PSK de donnée, de la variation de phases de porteuse dudit signal d'entrée synchronisé, lesdites corrections correspondant au déplacement du porteur projeté orthogonalement dans la direction de chaque voie formée, et étant appliquées par segment d'intégration cohérente spatiale élémentaires (905) (906) de longueur maximale définie par la période des données du signal

iii. Une intégration cohérente spatiale élémentaire du signal compensé pour chacun des états de phase de donnée (905), (906),(1005)

iv. Une détection de l'état de phase de la donnée courante (901), menée parallèlement à la compensation de déplacement, réalisée après la fin de la donnée pour chacun des signaux reçus

v. Une sélection (907) a posteriori du résultat d'intégration cohérente spatiale élémentaire du signal compensé, dit signal compensé sélectionné, selon l'état de phase détecté de la donnée

vi. Une compensation de la phase de donnée ponctuelle complémentaire (604) (707) de la phase de donnée, dite correction ponctuelle de la phase de donnée, appliquée sur les sorties (706) successives des segments d'intégration cohérente spatiale, pour ledit signal compensé sélectionné, lorsque la durée de ladite intégration cohérente spatiale dépasse la durée de cohérence de phase du signal,

vii. Une pondération de fenêtrage en amplitude (702) correspondant à la durée de ladite intégration cohérente spatiale (909) pour réduire le niveau des secondaires de la fonction de directivité spatiale résultante.

**8.** Procédé selon la revendication 3, et à l'une ou l'autre des revendication 6 ou 7, pour lequel les durées d'intégration cohérente spatiale et d'intégration cohérente spatiale élémentaire sont adaptées pour synthétiser l'ouverture angulaire de la figure de directivité attendue en fonction de la vitesse du porteur, et du pas d'échantillonnage spatial des segments d'antenne élémentaire, selon les étapes suivantes :

i. Détermination de la longueur apparente de l'antenne en fonction de l'objectif d'ouverture à -3dB du lobe principal de directivité de l'antenne (1101)

ii. Détermination de la durée de ladite intégration cohérente spatiale (1103) correspondant à la longueur de déplacement parcourue par le porteur pendant la durée de ladite intégration cohérente spatiale, la vitesse du porteur étant connue,

iii. Détermination de la durée de ladite intégration cohérente spatiale élémentaire (1104) maximum correspondant à la valeur minimum entre -a) la durée de cohérence de phase du signal, liée au rythme de transmission des données des messages contenus dans le signal -b) la durée correspondant à une distance parcourue par le porteur de moins d'une demi-longueur d'onde du signal

iv. si la durée de ladite intégration cohérente spatiale est plus longue que la durée de ladite intégration cohérente spatiale élémentaire, notamment dans le cas d'un porteur se déplaçant lentement: -a) découpage de l'antenne à synthèse d'ouverture en segments élémentaires d'antenne correspondant chacun à la durée de ladite intégration cohérente spatiale élémentaire 1107), puis, -b) compensation complémentaire (1108) effectuée par recalage ponctuel de la phase résiduelle correspondant au déplacement du porteur pendant la durée de ladite intégration cohérente spatiale élémentaire

v. Sommation (1109), sur le nombre de segments élémentaires d'antenne, des sorties de filtrage adapté correspondant aux segments élémentaires d'antenne sur la durée d'intégration cohérente, corrigées de la phase résiduelle.

**9.** Dispositif de détection et de localisation passif d'obstacles appliqué en réception (1201) des trajets de propagation directs et indirects de signaux à étalement de spectre, cohérents et synchronisés, transmis par des sources d'émission distinctes, le dit procédé réalisant un filtrage adapté global des signaux reçus, portant conjointement sur les angles, les retards et les dopplers (1208) attendus en réception des trajets indirects correspondant aux signaux réfléchis (1210) selon un ensemble d'hypothèses de positions d'obstacles (1204) qui décomposent l'environnement proche de l'antenne de réception en une pluralité de cellules de réflexion quadrillant l'espace en gisement-distance , ainsi que :-a) des moyens d'estimation de la puissance reçue cumulée, après filtrage adapté global conjoint, des signaux indirects réfléchis pour chacune des hypothèses de position d'obstacles définies par les cellules de réflexion, -b) des moyens d'extraction des maxima de puissance dans ledit quadrillage et -c) des moyens de localisation réalisant la poursuite des maxima de puissance en gisement et distance selon le temps.

**10.** Dispositif de détection et de localisation passif d'obstacles comprenant un récepteur de signaux et une unité de calcul configurée pour exécuter les étapes des procédés de détection et localisation selon l'une quelconque des revendications 1 à 8

[Fig. 1]

[Fig. 2]

[Fig. 3]

[Fig. 4]

[Fig. 5]

[Fig. 6]

[Fig. 7]

[Fig. 8]

Signal d'entrée reçu

t

```
┌─────────────────────┐
│ Détection du signe de│          801
│      donnée          │
└─────────────────────┘
```

```
┌─────────────────────┐
│ Retard d'un bit de   │          802
│      donnée          │
└─────────────────────┘
```
t+1

```
┌─────────────────────┐
│ Synchro sur transition│         803
│      de bit          │
└─────────────────────┘
```
t+1

```
┌─────────────────────┐
│ Compensation signée  │          804
│   du déplacement     │
└─────────────────────┘
```
t+1

Retard et doppler
trajet réfléchi

```
┌─────────────────────┐
│ Filtrage adapté en   │          808
│  retard et doppler   │
└─────────────────────┘
```
t+1

```
┌─────────────────────┐
│ Intégration cohérente│          805
│ spatiale élémentaire │
└─────────────────────┘
```
t+1

```
┌─────────────────────┐
│ Correction ponctuelle│          806
│  de phase résiduelle │
└─────────────────────┘
```
t+1

```
┌─────────────────────┐
│ Intégration cohérente│          807
│  spatiale globale    │
└─────────────────────┘
```
t+1

[Fig. 9]

Signal d'entrée reçu

Synchro sur transition de bit $_t$ — 902

Détection du signe de donnée — 901

Compensation signée du déplacement sous hypo. état de phase 1 — 903

Compensation signée du déplacement sous hypo. état de phase 2 — 904

Retard et doppler trajet réfléchi

Filtrage adapté en retard et doppler — 910

Filtrage adapté en retard et doppler — 911

Intégration cohérente spatiale élémentaire — 905

Intégration cohérente spatiale élémentaire — 906

Sélection selon le signe de donnée détecté — 907

Correction ponctuelle de phase résiduelle — 908

Intégration cohérente spatiale globale — 909

[Fig. 10]

$\Delta\varphi_1$ (offset de phase de déplacement non compensé à t1)
$\Delta\varphi_2$ (offset de phase de déplacement non compensé à t2)

[Fig. 11]

Résolution temporelle des codes PRN

1101

Ouverture à synthétiser; Θ3

Secteur gisement-distance à couvrir

Vitesse/cap/position porteur (IRS,odométre, PVT_GNSS)

**Détermination du quadrillage d'exploration des cases en angle-distance**

1102

Position en angle/distance du centre de chaque centre de cellule

Position/vitesse satellites

**Détermination de la direction, du retard et du doppler des trajets indirects associés à chaque cellule de réflexion en gisement-distance**

Position/vitesse/cap porteur

1103

Gisement/distance cellule

Gisement/distance cellule

1104

**Détermination de la durée d'intégration cohérente spatiale d'antenne correspondant à la synthèse d'ouverture**

**Détermination de la durée d'intégration cohérente spatiale élémentaire selon cohérence temporelle de la phase du signal**

Retard et doppler trajet indirect

1106

Vitesse et cap porteur

**Compensation signée du déplacement du porteur**

S(f)

1110

Signe/phase de la donnée

**Détection signe de donnés**

Retard et doppler trajet indirect

1110

**Filtrage adapté en retard/doppler par segment d'intégration cohérente élémentaire**

1105

**Pondération de fenêtrage continue en amplitude**

1108

**correction ponctuelle de phase résiduelle**

1107

**Intégration cohérente spatiale élémentaire**

1109

**Intégration cohérente spatiale globale**

Sortie filtrage adapté du signal selon la case de réflexion angle-distance

[Fig. 12]

Europäisches
Patentamt

European
Patent Office

Office européen
des brevets

# RAPPORT DE RECHERCHE EUROPEENNE

Numéro de la demande

EP 23 19 6558

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | KR 101 925 490 B1 (LIG NEX1 CO LTD [KR]) 5 décembre 2018 (2018-12-05) * abrégé; figure 8 * ----- | 1-10 | INV. G01S13/90 |
| A | CN 112 285 707 A (UNIV NANJING SCI & TECH) 29 janvier 2021 (2021-01-29) * le document en entier * ----- | 9,10 | |
| A | US 6 232 922 B1 (MCINTOSH JOHN C [US]) 15 mai 2001 (2001-05-15) * colonne 12, ligne 28 - colonne 13, ligne 14; figures 8a-8c, 13 * ----- | 9,10 | |
| A | ANTONIOU MICHAIL ET AL: "GNSS-based bistatic SAR: a signal processing view", EURASIP JOURNAL ON ADVANCES IN SIGNAL PROCESSING, vol. 2013, no. 1, 1 décembre 2013 (2013-12-01), XP093081223, DOI: 10.1186/1687-6180-2013-98 * le document en entier * ----- | 9,10 | |
| A | FREDERIC MAUSSANG ET AL: "Multistatic Scenarios for a GPS SAR System", PROCEEDINGS / 2008 IEEE INTERNATIONAL GEOSCIENCE & REMOTE SENSING SYMPOSIUM : JULY 6 - 11, 2008, JOHN B. HYNES VETERANS MEMORIAL CONVENTION CENTER, BOSTON, MASSACHUSETTS, U.S.A, IEEE, PISCATAWAY, NJ, 7 juillet 2008 (2008-07-07), pages III-270, XP031422486, ISBN: 978-1-4244-2807-6 * le document en entier * ----- -/-- | 9,10 | DOMAINES TECHNIQUES RECHERCHES (IPC) G01S |

Le présent rapport a été établi pour toutes les revendications

| Lieu de la recherche | Date d'achèvement de la recherche | Examinateur |
|---|---|---|
| Munich | 18 janvier 2024 | Rudolf, Hans |

EPO FORM 1503 03.82 (P04C02)

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

page 1 de 2

**EP 4 343 379 A1**

Europäisches Patentamt

European Patent Office

Office européen des brevets

# RAPPORT DE RECHERCHE EUROPEENNE

Numéro de la demande

EP 23 19 6558

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | NITHIROCHANANONT USSANAI ET AL: "Passive multi-static SAR - experimental results", IET RADAR SONAR NAVIGATION, THE INSTITUTION OF ENGINEERING AND TECHNOLOGY, UK, vol. 13, no. 2, 1 février 2019 (2019-02-01), pages 222-228, XP006084459, ISSN: 1751-8784, DOI: 10.1049/IET-RSN.2018.5226 * le document en entier * ----- | 9,10 | |
| A | CAZZANI LISA ET AL: "A ground based parasitic SAR experiment", IEEE TRANSACTIONS ON GEOSCIENCE AND REMOTE SENSING , vol. 38, no. 5 1 septembre 2000 (2000-09-01), pages 2132-2141, XP093081203, ISSN: 0196-2892, DOI: 10.1109/36.868872 ISBN: 978-0-7803-5207-0 Extrait de l'Internet: URL:https://ieeexplore.ieee.org/stamp/stamp.jsp?tp=&arnumber=868872 * le document en entier * ----- | 9,10 | DOMAINES TECHNIQUES RECHERCHES (IPC) |

Le présent rapport a été établi pour toutes les revendications

| Lieu de la recherche | Date d'achèvement de la recherche | Examinateur |
|---|---|---|
| Munich | 18 janvier 2024 | Rudolf, Hans |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

page 2 de 2

## ANNEXE AU RAPPORT DE RECHERCHE EUROPEENNE
## RELATIF A LA DEMANDE DE BREVET EUROPEEN NO.

**EP 23 19 6558**

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

**18-01-2024**

| Document brevet cité au rapport de recherche | | Date de publication | Membre(s) de la famille de brevet(s) | Date de publication |
|---|---|---|---|---|
| KR 101925490 | B1 | 05-12-2018 | AUCUN | |
| CN 112285707 | A | 29-01-2021 | AUCUN | |
| US 6232922 | B1 | 15-05-2001 | AUCUN | |

Pour tout renseignement concernant cette annexe : voir Journal Officiel de l'Office européen des brevets, No.12/82

EPO FORM P0460

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3114409, Revol M., Fourny N.
- EP 2410352 A, Priorité
- FR 1003026, Revol M.
- FR 1501416, Revol M.
- FR 1601449

**Littérature non-brevet citée dans la description**

- **GLENNON E.P et al.** Feasibility of Air Target Détection using GPS as a Bistatic Radar. *Journal of Global Positioning Systems,* 31 Décembre 2006, vol. 5 (1&2), ISSN 1446-3156, 119-126